# EUROPÄISCHE PATENTSCHRIFT

(11) **EP 3 786 613 B1**
(45) Veröffentlichungstag und Bekanntmachung des Hinweises auf die Patenterteilung: **19.06.2024**
(21) Anmeldenummer: 20190551.0
(22) Anmeldetag: 11.08.2020
(51) Int. Cl.: G01N 15/02, G01N 15/0205, G01N 15/00

(54) **PARTIKELGRÖSSENMESSGERÄT**
PARTICLE SIZE MEASURING DEVICE
APPAREIL DE MESURE DE LA TAILLE DE PARTICULES

(30) Priorität: 23.08.2019 DE 102019122723
(43) Veröffentlichungstag der Anmeldung: 03.03.2021
(73) Patentinhaber: Fritsch GmbH, 55743 Idar-Oberstein (DE)
(72) Erfinder: CROLLY, Günther, 67657 Kaiserslauten (DE); HUWER, Egbert, 55758 Oberreidenbach (DE); MUTTER, Wolfgang, 66892 Bruchmühlbach (DE); MICHEL, Bernhard, 91126 Rednitzhembach (DE)
(74) Vertreter: Blumbach · Zinngrebe Patentanwälte PartG mbB

(56) Entgegenhaltungen:
- DE-T2- 69 912 062
- DE-T2- 69 912 962
- US-A1- 2006 052 944
- US-A1- 2007 242 269

## Beschreibung

### Gebiet der Erfindung

Die Erfindung betrifft ein Partikelgrößenmessgerät, bei welchem die Partikelgrößenverteilung von Probenpartikeln in einer Messzelle anhand des Beugungsmusters eines Primärlichtstrahls bestimmt wird.

### Hintergrund der Erfindung

Ein Partikelgrößenmessgerät, welches nach dem Prinzip der Lichtbeugung arbeitet, verwendet einen Primärlichtstrahl in Form eines Lichtstrahlenbündels, zumeist von einem Laser geliefert, welcher die zu messende Probe durchstrahlt. Strahlabwärts der Probe wird die durch Streuung an dem Partikelensemble erzeugte Intensitätsverteilung mit einem Detektor aufgenommen. Das so erzeugte Streu-/Beugungsmuster kann mit der Mie-Theorie mathematisch beschrieben werden. Die Mie-Theorie behandelt sowohl Streuung unter Vorwärts- als auch unter Rückwärtswinkeln. Ein Teil der Mie-Theorie beschreibt die sogenannte Fraunhoferbeugung, welche die Lichtbeugung unter Vorwärtswinkeln betrifft.

Bekannte Partikelgrößenmessgeräte umfassen eine Lichtquelle, typischerweise einen Laser und eine sogenannte Strahlverarbeitungseinheit, welche den dünnen parallelen Laserstrahl zu einem Parallelstrahl mit größerem Durchmesser aufweitet. Bei frühen Partikelgrößenmessgeräten wurde die zu untersuchende Probe in einer Messzelle in diesem aufgeweiteten Parallelstrahl untersucht und das von den Teilchen erzeugte Beugungsspektrum mit einer Fourier-Linse, welche strahlabwärts der Probe angeordnet ist, auf einen Detektor fokussiert. Diese Technik wird gemäß ISO 13320-1:1999(E) als "konventionelle Technik" bezeichnet. Bei der konventionellen Technik, bei der die Teilchen im Parallelstrahl beleuchtet werden, hängt das mit einem bestimmten Detektordurchmesser nachweisbare Partikelgrößenintervall von der Brennweite der Fourier-Linse ab. Will man das Messintervall verändern, wird die Brennweite der Fourier-Linse verändert, das heißt es wird die Fourier-Linse ausgetauscht.

In der EP 0 207 176 derselben Anmelderin ist ein Partikelgrößenmessgerät beschrieben, welches die optischen Verhältnisse gegenüber der konventionellen Technik umkehrt. Dieser Aufbau wird gemäß ISO 13320-1:1999(E) als "Reverse Fourier Set-Up" bezeichnet. Daher wird diesbezüglich von "Inverser Fourier-Optik" gesprochen.

Bei der inversen Fourier-Optik befindet sich die Fourier-Linse strahlaufwärts der Messzelle, so dass die Probe in einem konvergenten Primärlichtstrahl beleuchtet wird. Ein Vorteil der inversen Fourier-Optik ist, dass das messbare Partikelgrößenintervall vom Abstand zwischen der Messzelle und dem Detektor abhängt. Daher wird in der EP 0 207 176 vorgeschlagen, die Messzelle auf dem optischen Pfad zu verschieben, wodurch unterschiedliche Partikelgrößenintervalle erfasst werden können. Inzwischen werden Partikelgrößenmessgeräte mit inverser Fourier-Optik nicht nur von der Anmelderin erfolgreich gebaut und vermarktet. Wie bereits erwähnt, hat die Technik der inversen Fourier-Optik inzwischen sogar Einzug in den internationalen Standard ISO 13320-1 "Particle Size Analysis - Laser Diffraction methods" Einzug gehalten. Es wird zum Beispiel auf die Version ISO 13320-1:1999(E) verwiesen.

Wenngleich derartige Partikelgrößenmessgeräte bereits vielfältig einsetzbar sind, besitzen sie häufig einen relativ langen optischen Pfad z.B. mit einer Brennweite der Fourier-Linse von 500 mm, wodurch die Geräte relativ groß werden. Grundsätzlich geht eine Vergrößerung des Abstandes zwischen der Messzelle und dem Detektor mit einer Vergrößerung der Brennweite des Lichtstrahlenbündels einher. Bei großen Brennweiten, insbesondere > 600 mm stoßen diese Geräte typischerweise an Stabilitätsgrenzen.

Es existieren auch kompaktere Partikelgrößenmessgeräte, doch ist bei diesen das Messintervall typischerweise relativ klein.

Ein nach dem Prinzip der EP 0 207 176 gebautes Partikelgrößenmessgerät der Anmelderin arbeitet zum Beispiel mit einer Laserwellenlänge von 632 nm oder 655 nm. Bei solchen Geräten beträgt der 1/e²-Durchmesser des Strahlspots am Vorwärtssensor typischerweise zwischen 80 µm und 250 µm. In Bezug auf den aufgeweiteten Strahldurchmesser vor der Fourierlinse gilt, dass mit einem größeren Strahldurchmesser des aufgeweiteten Strahls vor der Fourierlinse typischerweise ein kleinerer Strahlspot korrespondiert, was eine kleinere Strahldurchgangsöffnung im Vorwärtssensor ermöglichen könnte. Dem entgegen steht allerdings die Kompaktheit, da bei größerem Strahldurchmesser des aufgeweiteten Strahls vor der Fourierlinse davon auszugehen ist, dass die Kollimatorlinse eine größere Brennweite haben muss, was wiederum bedeutet, dass das optische System länger wird. Ferner würde auch der Gesamtdurchmesser des Kollimators größer.

Die Messzelle wird typischerweise im Durchflussbetrieb gefahren und besitzt eine Zu- und Ableitung für das dispergierte Probenmaterial, welche bei einer Verschiebung der Messzelle ebenfalls verschoben werden. Daher besitzen manche Partikelgrößenmessgeräte mit verschiebbarer Messzelle entlang des Verschiebungsweges der Messzelle typischerweise einen langen Schlitz im Gehäuse, welcher mit einer Art Bürste gegen Streulicht abgedichtet ist, damit die Leitungen bewegt werden können. Es ist ersichtlich, dass solche Bürsten keine perfekte Streulichtabschirmung bewirken. Im Übrigen können die Bürsten altern, wenn die Leitungen sehr lange an derselben Stelle verbleiben, was zu zusätzlichem Streulichteintrag in das Gerätegehäuse führen kann.

Weiter weist dieser Schlitz eine Breite auf, welche nur etwas größer ist als die Zu- und Ableitungen für das Probenmaterial, da sonst die Abdichtung gegen Streulicht noch schwieriger wäre. Daher ist das Auswechseln der Messzelle bei solchen Geräten kompliziert. Es muss nämlich das Gerät geöffnet, das heißt der Gehäusedeckel entfernt werden, und die Leitungen von der Messzelle gelöst werden. Beim Wiedereinbau werden die Schläuche durch den Schlitz mit den Bürsten gefädelt und wieder an der Messzelle angeschlossen, bevor das Gerätegehäuse wieder geschlossen werden kann. Ein Austausch der Messzelle ist somit schwierig. Noch schwieriger gestaltet sich ein Umbau von Nass-Dispergierung auf Trocken-Dispergierung, sofern dies überhaupt möglich ist. Außerdem sorgen diese Konstruktionselemente für relativ große Raumerfordernisse, weshalb diese Geräte groß, insbesondere relativ hoch und breit sind.

Bei der ANALYSETTE^{®} 22 NanoTec der Anmelderin (vgl. www.fritsch.de) ist der optische Pfad U-förmig gefaltet und es wird mit zwei unterschiedlichen Wellenlängen gemessen, um die widerstreitenden Eigenschaften eines großen Messintervalls und einer kompakten Bauform in Einklang zu bringen. Ferner steht dort die Messzelle fest und stattdessen wird dort die optische Bank relativ zur Messzelle verschoben, um das Partikelgrößenmessintervall zu verändern. Diese Techniken sind in den Patenten DE 10 2008 047 370 B4, DE 10 2008 064 665 B4, DE 10 2008 064 666 B4 und EP 2 163 883 B1 beschrieben und haben sich in der Praxis bewährt. Diese Geräte besitzen nur einen Vorwärtsdetektor und sind konstruktiv aufwändig, insbesondere was die verschiebbare optische Bank und die Justierung der optischen Komponenten zueinander betrifft.

In der US 2006/0052944 A1 ist ein Analysator für die Partikelgrößenverteilung beschrieben, bei welchem sich die Länge des Lichtpfades in einem abgekürzten Raum erstreckt und das Streulicht mittels eines Spiegels auf den Kleinwinkel-Streulichtdetektor 5(A) umgelenkt wird. Zusätzlich zu einem roten Halbleiterlaser ist noch eine LED für blaues Licht vorhanden, z.B. mit einer Wellenlänge von 400 nm. Die optische Achse des blauen LED-Lichts kann als geneigt bezeichnet werden und dadurch dass sich die Lichtachsen sich grob im Zentrum der Zelle überkreuzen, wird die Kreuzungsposition zur Lichtstrahlungsposition relativ zu den Teilchen in der Zelle.

Die US 2007/0242269 A1 betrifft Verfahren und Vorrichtungen zum Bestimmen von Teilchen-Charakteristika, wobei eine Vielzahl von unterschiedlichen Ausführungsbeispielen dargestellt sind.

Bei manchen Partikelgrößenmessgeräten ist der Streuwinkelmessbereich beschränkt, da sie aufgrund optischer und konstruktiver Randbedingungen tote Winkelbereiche aufweisen. Bestimmte Streuwinkel können z.B. nicht oder nur schwierig erfasst werden, unter anderem, da aufgrund der Brechungsindizes der Dispersion und der Messzellenfenster, typischerweise bei Streuwinkeln zwischen etwa 60° und 120° Totalreflexion entsteht. Daher wurden manchmal auch Messzellen mit seitlichen Prismen verwendet, um das Streulicht in diesen Winkelbereichen auskoppeln zu können. Dies hat jedoch den konstruktiven und finanziellen Aufwand für die Messzelle erhöht und hat auch konstruktive Grenzen.

Somit haben die verschiedenen bekannten Partikelgrößenmessgeräte alle gewisse Vor- und Nachteile und sind jeweils aus unterschiedlichen Gründen verbesserungswürdig.

### Allgemeine Beschreibung der Erfindung

Es ist eine Aufgabe der Erfindung, ein Partikelgrößenmessgerät bereit zu stellen, welches eine gute Kombination aus konstruktiver Einfachheit, Kosten, Größe des Messintervalls und Qualität der Messung darstellt und insbesondere eine hohe Zuverlässigkeit und Betriebsstabilität aufweist.

Ein weiterer Aspekt der Aufgabe ist es, ein Partikelgrößenmessgerät bereit zu stellen, welches eine kompakte Bauform aufweist, und trotzdem einen großen Partikelgrößen-Messbereich, insbesondere hin zu sehr kleinen und/oder großen Partikelgrößen abdeckt.

Noch ein Aspekt der Aufgabe ist es, ein Partikelgrößenmessgerät bereit zu stellen, welches komfortabel zu bedienen ist und bei welchem die Messzelle schnell und einfach vom Benutzer gewechselt werden kann.

Ein weiterer Aspekt der Aufgabe ist es, ein Partikelgrößenmessgerät bereit zu stellen, welches einerseits die sehr unterschiedlichen Vorteile der verschiedenen bekannten Partikelgrößenmessgeräte in Einklang zu bringen sucht und andererseits deren individuelle Nachteile vermeidet oder zumindest mindert.

Die Aufgabe der Erfindung wird durch den Gegenstand des unabhängigen Patentanspruchs gelöst. Die Unteransprüche betreffen vorteilhafte Weiterbildungen der Erfindung.

Die Erfindung betrifft ein Partikelgrößenmessgerät, welches die Partikelgrößenverteilung von Probenmaterial mittels Lichtbeugung bestimmt. Das Partikelgrößenmessgerät definiert eine Messebene, welche von dem Primärlichtstrahl und der Anordnung der Sensoren aufgespannt wird. Die Messebene verläuft im Übrigen parallel zu einem Messtisch bzw. einer optischen Bank auf dem bzw. der die optischen Komponenten des Systems aufgebaut sind.

Das Partikelgrößenmessgerät umfasst zunächst eine Lichtquelle, die einen, insbesondere monochromatischen Primärlichtstrahl erzeugt. Der Primärlichtstrahl, welcher in Form eines z.B. konvergenten Lichtstrahlenbündels vorliegen kann und an den Partikeln der zu untersuchenden Probe gestreut wird, definiert eine Strahlachse oder optische Hauptachse, die in der Messebene bzw. parallel oberhalb des Messtisches verläuft.

Das Probenmaterial, welches z.B. nass oder trocken dispergiert ist, befindet sich in einer entsprechenden Messzelle, die insbesondere im Durchfluss betrieben wird. Die Messzelle weist hierzu vorzugsweise einen Probeneinlass und einen Probenauslass auf. Die Messzelle wird im Strahlengang des Primärlichtstrahls angeordnet und umfasst ein Eintrittsfenster und ein Austrittsfenster, deren Innenseiten den Probenraum, in dem sich das Probenmaterial befindet, beidseits begrenzen. Das Probenmaterial wird demnach in dem Probenraum zwischen dem Eintrittsfenster und dem Austrittsfenster mit dem Primärlichtstrahl, der zum Eintrittsfenster in den Probenraum eintritt, bestrahlt, wobei das Licht an der dispersen Phase, z.B. dispergierten Partikeln in dem Probenvolumen gestreut bzw gebeugt wird und so ein Beugungsmuster erzeugt. Der ungestreute Anteil des Primärlichtstrahls tritt durch das Austrittsfenster wieder aus der Messzelle aus. Das an den Partikeln gebeugte Sekundärlicht tritt unter Vorwärtswinkeln durch das Austrittsfenster und unter Rückwärtswinkeln durch das Eintrittsfenster aus der Messzelle aus.

Die Messzelle bzw. der Probenraum sind im Großen und Ganzen flächig ausgebildet und definieren eine Messzellenebene, welche im Wesentlichen durch die Innenseite des Austrittfensters und/oder des Eintrittsfensters definiert wird. Die Messzellenebene verläuft also im Großen und Ganzen quer - was aber hier nicht notwendigerweise senkrecht bedeutet - zur optischen Hauptachse oder Strahlachse und im Übrigen auch quer zur Messebene.

Das so an den Probenpartikeln erzeugte Beugungsmuster wird mittels einer Detektoreinrichtung nachgewiesen. Die Detektoreinrichtung weist hierzu eine Mehrzahl von Einzeldetektoren oder Sensorflächen unter verschiedenen Beugungswinkeln in der Messebene auf, um das Beugungslicht aus der Messzelle gleichzeitig unter verschiedenen Beugungswinkeln in der Messebene nachweisen zu können. Mit anderen Worten spannen die optische Hauptachse oder Strahlachse und die Sensorflächen die Messebene auf.

Gemäß einem Aspekt der Erfindung ist nun die Messzelle in der Messebene schräg zur optischen Hauptachse bzw. Strahlachse ausgerichtet.

Mit anderen Worten ist die Messzelle um einen Schrägstellungswinkel κ ≠ 0° in der Messebene gedreht ausgerichtet, ist also zwar quer, aber nicht senkrecht zur optischen Hauptachse ausgerichtet. Dadurch, dass die Messzelle um eine Achse senkrecht zur Messebene bzw. um eine Achse senkrecht zum Messtisch gedreht ist, tritt der Primärlichtstrahl schräg durch das Eintrittsfenster in die Messzelle ein und der ungestreute Primärlichtstrahl tritt wieder schräg aus der Messzelle aus. Anders gesagt verläuft die Normale auf der Messzellenebene unter dem Schrägstellungswinkel κ zum Primärlichtstrahl bzw. zu der optischen Hauptachse, aber vorzugsweise in der Messebene. Die optische Hauptachse und die Messzellenebene schließen in der Messebene also einen Winkel β ≠ 90° ein, wobei der Schrägstellungwinkel κ = 90° - β beträgt, im Gegensatz zu konventionellen Geräten, bei denen die Winkel in der Messebene κ = 0° und β = 90° betragen. Die Messebene wird insbesondere definiert als die Ebene in der die Detektoren angeordnet sind bzw. die Streuwinkel messen, wobei diese Ebene vorzugsweise horizontal ausgerichtet ist. Die Drehung der Messzelle um einen Schrägstellungswinkel κ ≠ 0° in der Messebene bedeutet demnach, dass die Normale auf der Messzellenebene und die optische Hauptachse in der Messebene den Schrägstellungswinkel κ zueinander einschließen und der Schrägstellungswinkel κ ≠ 0° ist. Mit anderen Worten ist die Normale auf der Messzellenebene relativ zu der optischen Hauptachse um den Schrägstellungswinkel κ ≠ 0° um eine Drehachse gedreht, die senkrecht zur Messebene bzw. vertikal steht.

Dies hat den Vorteil, dass jeweils auf einer Seite der optischen Hauptachse der Austrittswinkel des Streulichts aus dem jeweiligen Fenster um den Schrägstellungswinkel reduziert ist, und somit Bereiche der Streuwinkel in der Nähe von 90° zur optischen Hauptachse einfach aus der Messzelle ausgekoppelt und erfasst werden können, die bei κ = 0° nicht, zumindest nicht ohne seitliches Austrittsprisma, erfasst werden könnten.

Insbesondere können auf der einen Seite der optischen Hauptachse große Vorwärtswinkel im Bereich von etwa 45° bis 90° und auf der anderen Seite der optischen Hauptachse Rückwärtswinkel im Bereich von etwa 90° bis 135° besser als bei κ = 0° ausgekoppelt und erfasst werden.

Darüber hinaus kann diese Bauart aber auch zu einer kompakten Anordnung aus Messzelle und Detektoreinrichtung beitragen, unter anderem, da der Ringbereich um das Streuzentrum durch die Messzelle einerseits und die Detektoreinrichtung andererseits gut ausgenutzt werden kann. Insbesondere können bestimmte Sensoren der Detektoreinrichtung relativ dicht an der Messezelle bzw. am Streuzentrum positioniert werden.

Ein weiterer Vorteil der Schrägstellung liegt darin, dass vermieden werden kann, dass Teile des Primärlichtstrahls zurück in die Lichtquelle reflektiert werden und z.B. die Regelung des Lasers stören.

Vorzugsweise arbeitet das Partikelgrößenmessgerät im konvergenten Strahl bzw. mit inverser Fourier-Optik.

In vorteilhafter Weise kann mit dem Partikelgrößenmessgerät ein relativ großes Messintervall abgedeckt werden, ohne dass eine relative Verschiebung zwischen der Messezelle und der optischen Bank durchgeführt werden muss. Mit anderen Worten ist die Messzelle vorzugsweise feststehend und wird nicht auf dem optischen Pfad verschoben, um das Messintervall zu verändern. D.h. der Abstand zwischen der Messzelle und den Sensoren ist insbesondere nicht verstellbar, um das Messintervall zu verändern. Mit anderen Worten steht die Messzelle fix in einem Sensorkreis der Detektoreinrichtung. Ferner benötigt das Partikelgrößenmessgerät insbesondere kein Teleskop oder telezentrisches System im Strahlengang. Weiter arbeitet das Partikelgrößenmessgerät insbesondere mit einem geraden, nicht gefalteten Strahlengang.

Dies ermöglicht einerseits eine kompakte Bauweise und andererseits eine konstruktive Einfachheit des Partikelgrößenmessgeräts, wodurch eine hohe Kontrolle und Qualität der optischen Gegebenheiten einschließlich des Primärlichtstrahls und allgemein eine hohe Präzision gewährleistet werden können.

Der Schrägstellungswinkel κ in der Messebene zwischen der Normalen auf der Messzellenebene und der optischen Hauptachse ist ungleich 0° und liegt vorzugsweise im Bereich zwischen 5° und 62°, vorzugsweise im Bereich zwischen 10° und 50°, vorzugsweise im Bereich zwischen 15° und 45°, vorzugsweise bei 30° +/-10°, vorzugsweise +/- 5°.

Es hat sich gezeigt, dass ein Schrägstellungswinkel κ in diesen Bereichen einerseits Kompaktheit und andererseits optische Parameter in vorteilhafter Weise gut in Einklang zu bringen vermag. Vorzugsweise verläuft die Normale auf der Messzellenebene in der Messebene, also parallel zur optischen Bank. Die Messzelle ist also vorzugsweise nicht aus der Messebene heraus geneigt. Dies soll allerdings auch nicht grundsätzlich ausgeschlossen sein, ist jedoch nicht notwendig.

Gemäß der Erfindung weist die Detektoreinrichtung einen Vorwärtsdetektor bzw. Vorwärtssensor mit einem Hauptsensor in Vorwärtsrichtung auf der optischen Hauptachse auf. Vorzugsweise ist der Primärlichtstrahl auf den Hauptsensor fokussiert und umfasst hierzu eine Fokussieroptik die den Primärlichtstrahl auf den Vorwärtssensor fokussiert. Vorzugsweise arbeitet das Partikelgrößenmessgerät mit der Messzelle im konvergenten Strahl, d.h. mit inverser Fourier-Optik. Hierzu befindet sich also die Fokussierlinse strahlaufwärts der Messzelle. Dabei definieren die Lichtquelle, die Messzelle und der Vorwärtssensor die optische Hauptachse, die in der Messebene verläuft.

Dies kann weiter zu einer kompakten Bauform und einem einfachen optischen Aufbau der optischen Elemente beitragen.

Erfindungsgemäss weist der Vorwärtssensor eine Strahldurchgangsöffnung für den Primärlichtstrahl auf. Weiter ist der Vorwärtssensor mit der Strahldurchgangsöffnung bezogen auf Primärlichtstrahl vor der Messzelle in der Messebene lateral leicht versetzt, um den Strahlversatz aufgrund der Lichtbrechung des Primärlichtstrahls am Eintrittsfenster und Austrittsfenster der schräggestellten Messzelle zu kompensieren. Ferner vorzugsweise ist der Vorwärtssensor mit einer x-y-Verschiebeeinrichtung auf dem Messtisch montiert, wobei die x-y-Verschiebeeinrichtung, z.B. ein x-y-Verschiebeschlitten, eine Verschiebung des Vorwärtssensors in zumindest einer Transversal-Richtung, vorzugsweise in beiden Transversal-Richtungen x und y transversal zur optischen Hauptachse ermöglicht.

Damit kann der Vorwärtssensor in zumindest einer, vorzugsweise in beiden Transversal-Richtungen quer zur optischen Hauptachse, also links-rechts (x) und oben-unten (y), verschoben werden, um den Vorwärtssensor auf dem Messtisch relativ zu dem Fokus-Spot des Primärlichtstrahls ausrichten zu können, damit der Fokus-Spot möglichst zentral in der Strahldurchgangsöffnung liegt.

Dadurch kann die Strahldurchgangsöffnung relativ klein gewählt werden und damit das Messintervall hin zu großen Partikelgrößen vergrößert werden.

Im Gegenzug kann die Lichtquelle feststehend auf der optischen Bank montiert sein und braucht nicht relativ zur Messzelle bzw. zum Detektoreinrichtung justiert zu werden, wenngleich das auch nicht grundsätzlich ausgeschlossen sein soll.

Die Strahldurchgangsöffnung weist vorzugsweise einen Durchmesser von <= 250 µm, vorzugsweise <= 150 µm, vorzugsweise 100 µm +/- 25 µm auf.

Der Abstand des Vorwärtssensors von der Lichtquelle bzw. die Brennweite der Fokussierlinse beträgt vorzugsweise im Bereich zwischen 200 mm bis 600 mm, vorzugsweise im Bereich zwischen 300 mm und 500 mm, vorzugsweise 400 mm +/- 50 mm.

Weiter vorzugsweise beträgt der Abstand des Vorwärtssensors vom Mittelpunkt der Messzelle, d.h. vom Streuzentrum im Bereich zwischen 50 mm bis 450 mm, vorzugsweise im Bereich zwischen 150 mm und 350 mm, vorzugsweise 250 mm +/- 50 mm.

Dies kann weiter zu einer kompakten Bauweise und guten optischen Eigenschaften der Anordnung beitragen.

Gemäß einer bevorzugten Ausführungsform umfasst der Hauptsensor eine Vielzahl von einzeln auslesbaren Sensorflächen in Form von um die Strahldurchgangsöffnung konzentrisch angeordneten Ringsegmenten, beispielsweise 43 Stück, vorzugsweise in einem Streuwinkelbereich zwischen der Begrenzung durch die Strahldurchgangsöffnung und 6,5°. Der kleinste um die Strahldurchgangsöffnung erfassbare Streuwinkel kann trotz der kurzen Bauform vorzugsweise etwa 0,28 mrad betragen, was einem Radius von 70 µm entspricht.

Der Vorwärtssensor enthält ferner vorzugsweise noch eine Mehrzahl von assemblierten Einzeldetektoren in einem Streuwinkelbereich zwischen 6,5° und 22°. Vorzugsweise sind diese assemblierten Einzeldetektoren in der Messebene auf der zum Hauptsensor gegenüberliegenden Seite der Strahldurchgangsöffnung angeordnet.

Dadurch kann verfügbare Detektorfläche für den Vorwärtssensor gut ausgenutzt werden.

Ferner vorzugsweise sind die assemblierten Einzeldetektoren in zumindest eine erste und zweite Gruppe aufgeteilt, wobei die Sensoren der ersten Gruppe bei kleineren Streuwinkeln als die Sensoren der zweiten Gruppe angeordnet sind und/oder die Sensoren der ersten Gruppe kleiner als die Sensoren der zweiten Gruppe sind. Die Sensoren der ersten Gruppe erfassen vorzugsweise einen Bereich von 6,5° bis 11,5° und die Sensoren der zweiten Gruppe erfassen vorzugsweise einen Bereich von 11,5° bis 22°.

Vorzugsweise weisen die Sensoren der assemblierten Einzeldetektoren jeweils eine Fläche im Bereich zwischen 10 mm² und 500 mm², vorzugsweise im Bereich zwischen 15 mm² und 200 mm² auf. Weiter vorzugsweise weisen die Sensoren der ersten Gruppe vorzugsweise jeweils eine Fläche im Bereich zwischen 10 mm² und 100 mm², vorzugsweise im Bereich zwischen 15 mm² und 50 mm² , vorzugsweise von 25 mm² +/- 10 mm² auf und/oder die Sensoren der zweiten Gruppe weisen vorzugsweise jeweils eine Fläche im Bereich zwischen 25 mm² und 400 mm², vorzugsweise im Bereich zwischen 50 mm² und 200 mm², vorzugsweise von 100 mm² +/- 50 mm² auf. Beispielsweise haben die Sensoren der ersten Gruppe eine Größe von 5 mm x 5 mm und die Sensoren der zweiten Gruppe von 10 mm x 10 mm.

Auch dies trägt zu einer guten Ausnutzung unter den optischen Gegebenheiten bei.

Gemäß einer bevorzugten Ausführungsform umfasst die Detektoreinrichtung zumindest einen oder eine Mehrzahl an Großwinkel-Vorwärtsstreuungsdetektoren unter Vorwärtstreuwinkeln von größer als 20° und/oder zumindest einen oder eine Mehrzahl von Rückstreudetektoren unter Rückwärtsstreuwinkeln (90°-180°).

Damit können in vorteilhafter Weise große Streuwinkel gemessen und damit kleine Partikelgrößen erfasst werden.

Die Großwinkel-Vorwärtsstreuungsdetektoren und/oder die Rückstreudetektoren sind vorzugsweise auf einem Detektorbogen mit einem Bogenradius um den Mittelpunkt der Messzelle bzw. das Streuzentrum angeordnet. Weiter vorzugsweise ist der Bogenradius kleiner als der Abstand des Vorwärtssensors bzw. des Hauptsensors von der Lichtquelle und/oder kleiner als der Abstand des Vorwärtssensors von der Messzelle. Die Großwinkel-Vorwärtsstreuungsdetektoren und/oder die Rückstreudetektoren sind demnach in einem Abstand vom Streuzentrum angeordnet, der kleiner ist als der Abstand des Fokus des Primärlichtstrahls vom Streuzentrum. Der Bogenradius kann sogar so klein gewählt werden, dass er kleiner ist, als die Querausdehnung der Messzelle, so dass die Messzelle den Bogenradius schneidet bzw. durchbricht. Die Großwinkel-Vorwärtsstreuungsdetektoren sind vorzugsweise auf der Seite der optischen Hauptachse und der Messzelle angeordnet, auf der das Austrittsfenster mit der optischen Hauptachse einen Winkel von größer als 90° einschließt und/oder die Rückstreudetektoren sind vorzugsweise auf der Seite der optischen Hauptachse und der Messzelle angeordnet, auf der das Eintrittsfenster mit der optischen Hauptachse einen Winkel von größer als 90° einschließt. Der Detektorbogen der Großwinkel-Vorwärtsstreuungsdetektoren und der Detektorbogen der Rückstreudetektoren wird beidseits von der Messzelle unterbrochen. Ferner vorzugsweise kann die Messzelle seitlich in der Messebene bzw. horizontal in den Strahlengang eingeschoben werden, und zwar vorzugsweise durch die Unterbrechungen der Detektorbögen.

Mit anderen Worten liegen die Großwinkel-Vorwärtsstreuungsdetektoren vorzugsweise in der Messebene zumindest mehrheitlich auf der Seite der optischen Hauptachse, zu welcher das schrägstehende Austrittsfenster zugewandt ist und/oder die Rückstreudetektoren liegen vorzugsweise in der Messebene zumindest mehrheitlich auf der Seite der optischen Hauptachse, zu welcher das schrägstehende Eintrittsfenster zugewandt ist.

Vorzugsweise sind die Großwinkel-Vorwärtsstreuungsdetektoren und/oder die Rückstreudetektoren auf einem Detektorbogen mit einem Bogenradius um den Mittelpunkt der Messzelle bzw. das Streuzentrum mit einem Bogenradius angeordnet, welcher im Bereich zwischen 50 mm und 200 mm, vorzugsweise im Bereich zwischen 75 mm und 150 mm, vorzugsweise 110 mm +/- 25 mm beträgt.

Auch dies sorgt für eine kompakte Bauform.

Mit anderen Worten ist also vorzugsweise eine Vielzahl von Sensoren um die Messzelle angeordnet, wobei der gesamte Streuwinkelbereich von nahe 0° bis 180° mit dem Detektorsystem, welches die Gesamtheit aus dem Vorwärtssensor, den Großwinkel-Vorwärtsstreuungsdetektoren und den Rückstreudetektoren umfasst, abschnittsweise abgedeckt wird.

Gemäß einem Ausführungsbeispiel sind die Großwinkel-Vorwärtsstreuungsdetektoren unter einem, mehreren oder allen der folgenden Streuwinkel angeordnet:
24° +/-10°,
36,5° +/-10°,
49,3° +/-10°,
63,5° +/-10°,
80° +/- 10°
und/oder die Rückstreudetektoren sind unter einem, mehreren oder allen der folgenden Streuwinkel angeordnet:
105° +/- 15°,
140,3° +/- 15°,
163,8° +/-15°,
-163,5° +/-15°.

Gemäß einer weiter bevorzugten Ausführungsform ist zumindest eine Monitor-Fotodiode zum Überwachen der Leistung des an zumindest einer, an mehreren oder allen der folgenden Flächen reflektierten Primärlichtstrahls umfasst:
Außenseite des Eintrittsfensters,
Innenseite des Eintrittsfensters,
Innenseite des Austrittsfensters,
Außenseite des Austrittsfensters,
wobei die zumindest eine Monitor-Fotodiode in der Messebene in Rückwärtsrichtung beim doppelten Schrägstellungswinkel κ angeordnet ist.

Eine noch bessere Überwachungsmöglichkeit ergibt sich, wenn eine erste Monitor-Fotodiode zum Überwachen der Leistung des an der Außen- und/oder Innenseite des Eintrittsfensters reflektierten Primärlichtstrahls umfasst ist und/oder eine zweite Fotodiode zum Überwachen der Leistung des an der Innen- und/oder Außenseite des Austrittsfensters reflektierten Primärlichtstrahls umfasst ist. Mittels der Reflektion an der Außenseite des Austrittsfensters kann die Strahlabsorption überwacht werden. Vorzugsweise sind die erste und zweite Fotodiode in der Messebene in Rückwärtsrichtung beim doppelten Schrägstellungswinkel κ und um den Strahlversatz des reflektierten Primärlichtstrahls nebeneinander angeordnet.

Ferner vorzugsweise ist eine dritte Fotodiode hinter der Strahldurchgangsöffnung des Vorwärtssensors angeordnet, um den Primärlichtstrahl der durch die Messzelle hindurchgeht zu überwachen.

Hiermit können in vorteilhafter Weise die Leistung des Lasers und die Strahlabsorption überwacht werden und anhand der Symmetrie der Reflexe kann sogar festgestellt werden, ob das Eintritts- und das Austrittsfenster richtig herum eingebaut sind.

Vorzugsweise beträgt die Wellenlänge λ des monochromatischen Lichts im Bereich zwischen 380 nm und 680 nm, vorzugsweise zwischen 480 nm und 580 nm, vorzugsweise λ = 532 nm +/-25 nm. Besonders bevorzugt umfasst die Lichtquelle demnach eine grüne Lichtquelle, z.B. eine grüne Laserdiode als Primärlichtstrahlquelle.

Vorzugsweise arbeitet das Partikelgrößenmessgerät lediglich mit einem einzigen Laser als Primärlichtquelle bzw. mit nur einer einzigen Lichtwellenlänge, was Aufwand und Kosten reduziert.

Vorzugsweise ist die Laserdiode an die Fokussieroptik fasergekoppelt, z.B. mittels einer polarisationserhaltenden Single-Mode-Faser. Weiter vorzugsweise ist der Primärlichtstrahl senkrecht zur Messebene, also vertikal polarisiert, was bei sehr kleinen Partikelgrößen zu einer ausreichenden Signalhöhe beitragen kann.

Vorzugsweise umfasst die Fokussieroptik einen Kollimator mit einer Kollimatorlinse zur Parallelisierung des aus der optischen Faser divergent austretenden Laserstrahls, so dass der Lichtstrahl am Ausgang der Kollimatorlinse ein aufgeweiteter Parallelstrahl ist, welcher dann in eine Fokussierlinse eintritt, welche als die Fourierlinse angesehen werden kann und die den Primärlichtstrahl durch die Messzelle hindurch auf den Vorwärtssensor fokussiert. Die optische Faser kann ferner z.B. mittels einer FC/PC Steckverbindung an den Kollimator angekoppelt sein. Vorzugsweise umfasst die Fokussieroptik demnach zumindest zwei unabhängige konvexe Linsen. Die Kollimatorlinse und/oder die Fourierlinse haben vorzugsweise einen Durchmesser von 25 mm +/- 10 mm oder +/- 5 mm.

Gemäß einer bevorzugten Ausführungsform ist die Fokussierlinse am Ausgang der Lichtquelle unmittelbar nach der Kollimatorlinse angeordnet, also insbesondere noch vor den Rückstreuungssensoren. Der Abstand zwischen der Kollimatorlinse und der Fokussierlinse ist dabei vorzugsweise kleiner als 100 mm, vorzugsweise kleiner als 50 mm, vorzugsweise kleiner als 25 mm.

Vorzugsweise beträgt die Brennweite der Fokussierlinse im Bereich zwischen 200 mm bis 600 mm, vorzugsweise im Bereich zwischen 300 mm und 500 mm, vorzugsweise 400 mm +/- 50 mm.

All dies sorgt weiter für eine kompakte optische Anordnung und kann zur Qualität des Primärlichtstrahls beitragen.

Der 1/e²-Strahldurchmesser des Primärlichtstrahls nach der Kollimatorlinse und vor der Fokussierlinse, also des aufgeweiteten parallelisierten Laserstrahls, beträgt vorzugsweise im Bereich zwischen 3 mm und 20 mm, vorzugsweise 10 mm +/- 5 mm.

Damit kann ein guter Fokusspot im Bereich des Vorwärtssensors erzielt werden.

Vorzugsweise beträgt der Strahldurchmesser des fokussierten Primärlichtstrahls (Fokus-Spot) am Hauptsensor in beiden Strahlquerschnitten senkrecht zur optischen Hauptachse <= 60 µm, vorzugsweise <= 45 µm, vorzugsweise 32 µm +/- 10 µm.

Vorzugsweise beträgt der Brechungsindex des transparenten Materials des Eintrittsfensters und/oder des Austrittsfensters n_{F} <= 1,6, vorzugsweise n_{F} <= 1,55, vorzugsweise n_{F} = 1,51 +/- 0,5. Die Dicke der Messzelle liegt einschließlich des Eintrittsfensters und Austrittfensters im Bereich zwischen 6 mm und 40 mm, vorzugsweise im Bereich zwischen 8 mm und 25 mm, vorzugsweise im Bereich zwischen 10 mm und 20 mm, vorzugsweise von 14 mm +/- 5 mm, vorzugsweise +/- 3 mm. Dadurch kann der durch die vierfache Lichtbrechung an den Innen- und Außenseiten des Eintritts- und Austrittsfensters erzeugte Strahlversatz in vertretbaren Grenzen gehalten werden.

Trotzdem weist der fokussierte Primärlichtstrahl im Bereich des Hauptsensors einen Astigmatismus auf. Vorzugsweise wird der Hauptsensor entlang der optischen Hauptachse zwischen den vom Astigmatismus verursachten beiden Brennlinien des Primärlichtstrahls angeordnet, bevorzugt am Ort des Kreises kleinster Verwirrung.

So können sich trotz des Astigmatismus der horizontale und der vertikale Strahldurchmesser am Hauptsensor um weniger als 50%, vorzugsweise weniger als 30%, vorzugsweise weniger als 20%, vorzugsweise um 9 % +/- 5%-Punkte unterscheiden.

Somit kann die Strahldurchgangsöffnung relativ klein gehalten und das Messintervall zu großen Partikelgrößen ausgedehnt werden.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine dreidimensionale Ansicht einer Ausführungsform des erfindungsgemäßen Partikelgrößenmessgeräts mit einer Nassdispergiervorrichtung,
- Fig. 2: eine teilweise geschnittene Draufsicht von oben auf die Messebene bzw. auf den Messtisch,
- Fig. 3: einen Querschnitt durch die Messzelle und die weiteren optischen Komponenten in der Messebene 23,
- Fig. 4: eine vergrößerte Darstellung der Messzelle und der Großwinkel-Vorwärtsstreuungsdetektoren sowie der Rückstreusensoren im Detektorbogen um das Streuzentrum,
- Fig. 5: einen Ausschnitt aus Fig.4 mit den Rückstreudetektoren und entsprechender Bemaßung,
- Fig. 6: einen Ausschnitt aus Fig. 4 mit den Großwinkel-Vorwärtsstreuungsdetektoren und entsprechender Bemaßung,
- Fig. 7: einen vergrößerten Ausschnitt aus Fig. 3 mit dem Vorwärtssensor,
- Fig. 8: eine Draufsicht von vorne auf den Vorwärtssensor aus Fig. 7,
- Fig. 9: eine vergrößerte Darstellung des Bereichs A aus Fig. 8 mit dem Hauptsensor,
- Fig. 10: eine weiter vergrößerte Darstellung des Hauptsensors im Bereich der Strahldurchgangsöffnung,
- Fig. 11: eine schematische Darstellung der Totalreflexion an den optischen Grenzflächen der Messzelle,
- Fig. 12: eine schematische Darstellung der Winkelverhältnisse in der Messebene
- Fig. 13: eine schematische Darstellung des konvergenten Primärlichtstrahls und der Messzelle von oben,
- Fig. 14: eine Darstellung von Simulationsergebnissen des Primärlichtstrahl-Querschnitts im Bereich des Fokus-Spots bezüglich des Astigmatismus des Primärlichtstrahls,
- Fig. 15: ein simuliertes Strahlprofil des Primärlichtstrahls in x-Richtung im Bereich des Kreises kleinster Verwirrung, und
- Fig. 16: ein simuliertes Strahlprofil des Primärlichtstrahls in y-Richtung im Bereich des Kreises kleinster Verwirrung.

### Detaillierte Beschreibung der Erfindung

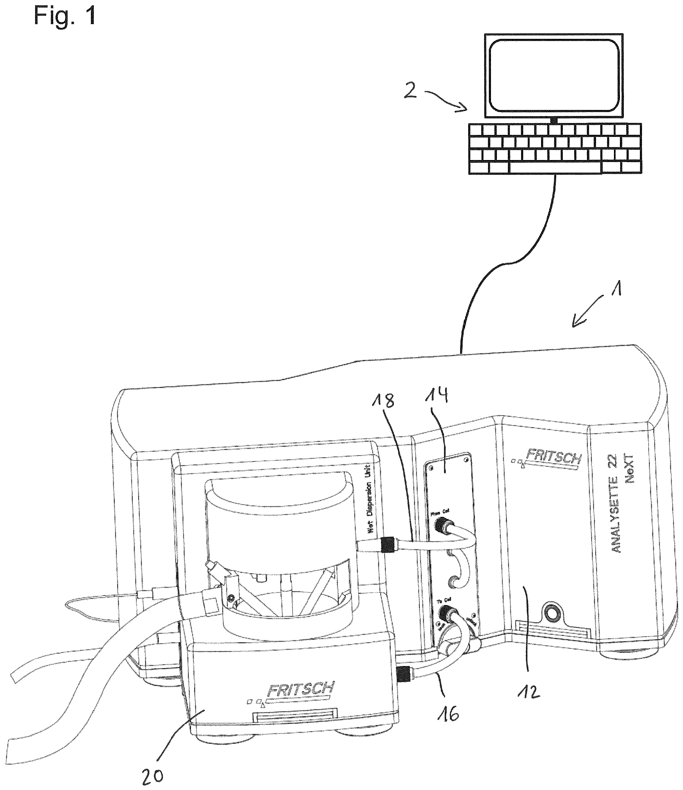

Bezugnehmend auf Fig. 1 weist das Partikelgrößenmessgerät 1 eine Auswerteeinrichtung 2 zur Auswertung der Partikelgrößenverteilung anhand des Streu- bzw. Beugungsmusters und ein Gerätegehäuse 12 auf, in welches eine Messzelle 14 einsetzbar ist. Im vorliegenden Beispiel ist die Messzelle als eine Nass-Messzelle ausgebildet. Wenn als Messzelle 14 eine Nass-Messzelle verwendet wird, ist diese mittels einer Vor- und einer Rücklaufleitung 16, 18 mit einer Nassdispergiervorrichtung 20 verbunden, welche die Dispersion mit flüssigem Dispersionsmedium bereitstellt und im Durchflussbetrieb durch die Messzelle 14 pumpt. Alternativ kann die Messzelle 14 allerdings auch eine Trocken-Messzelle sein.

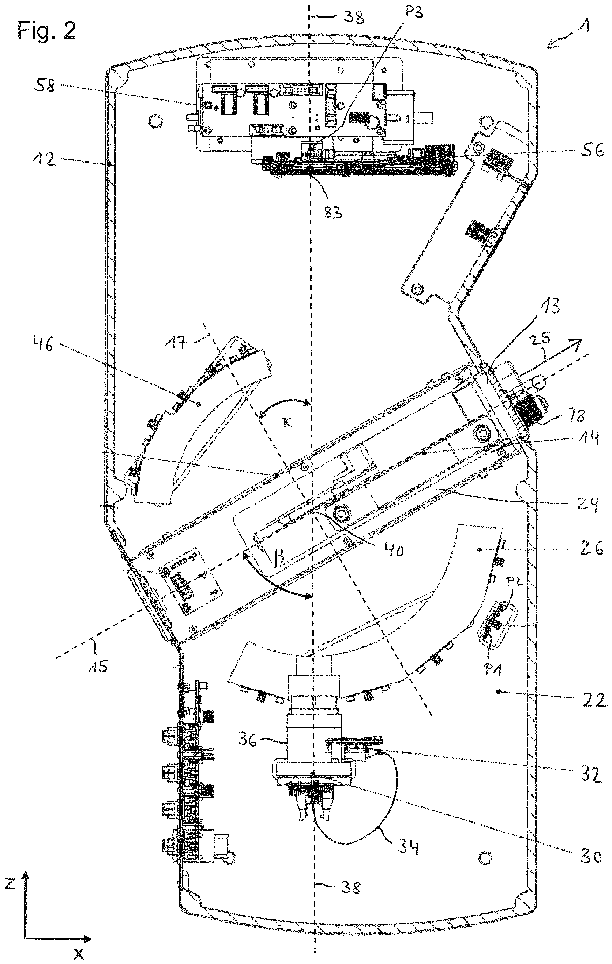

Bezugnehmend auf Fig. 2 weist das Partikelgrößenmessgerät 1 einen Messtisch 22 auf, welcher eine optische Bank zur Montage der optischen Komponenten bildet. Auf dem Messtisch 22 ist eine Halterung 24 für die Messzelle 14 zentral montiert. Strahlaufwärts der Messzelle 14 ist ein Detektorbogen 26 mit vier Rückstreudetektoren 26.1 - 26.4 montiert, welche nachfolgend noch genauer erläutert werden.

Ferner ist auf dem Messtisch 22, in diesem Beispiel an dem Detektorbogen 26 für die Rückstreusensoren, die Lichtquelle 30 montiert.

Die Lichtquelle 30 umfasst eine fasergekoppelte grüne Laserdiode 32 mit polarisationserhaltender Single-Mode-Faser 34. Die Ankopplung an die Strahlverarbeitungseinheit 36 bzw. den später noch genauer erläuterten Kollimator erfolgt über eine FC/PC-Steckverbindung. Die Polarisationserhaltung sorgt dafür, dass der Primärlichtstrahl, der aus der Lichtquelle 30 austritt, senkrecht zum Messtisch 22 bzw. senkrecht zur Messebene, also vertikal polarisiert ist. Die Polarisation des Primärlichtstrahls steht demnach senkrecht auf der Messebene und damit senkrecht zu den Sensoren, die sich in horizontaler Richtung erstrecken. Dadurch kann auch bei sehr kleinen Partikeln noch ein genügend hohes Streulichtsignal erhalten werden.

Mit anderen Worten umfasst die Lichtquelle 30 eine grüne Laserdiode 32, welche mit einer optischen Faser 34 an die Strahlverarbeitungseinheit 36 auf der Strahlachse oder optischen Hauptachse 38 angekoppelt ist. In diesem Beispiel ist die Laserdiode 32 seitlich an der Lichtquelle 30 montiert und braucht aufgrund der Faserkopplung selbst nicht auf der optischen Hauptachse 38 zu sitzen. Dies kann unter anderem die Justierung des optischen Systems vereinfachen.

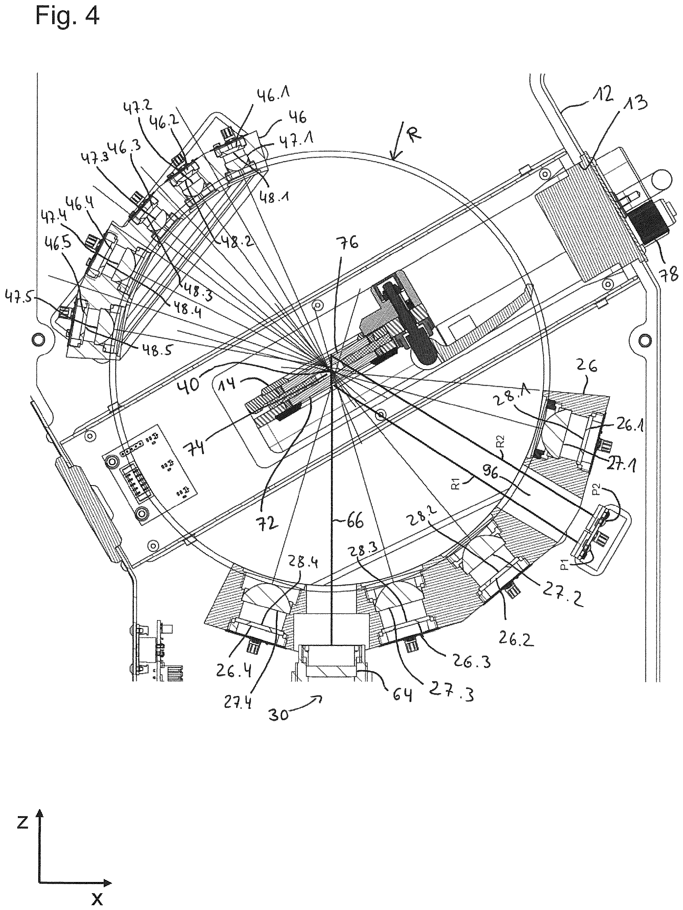

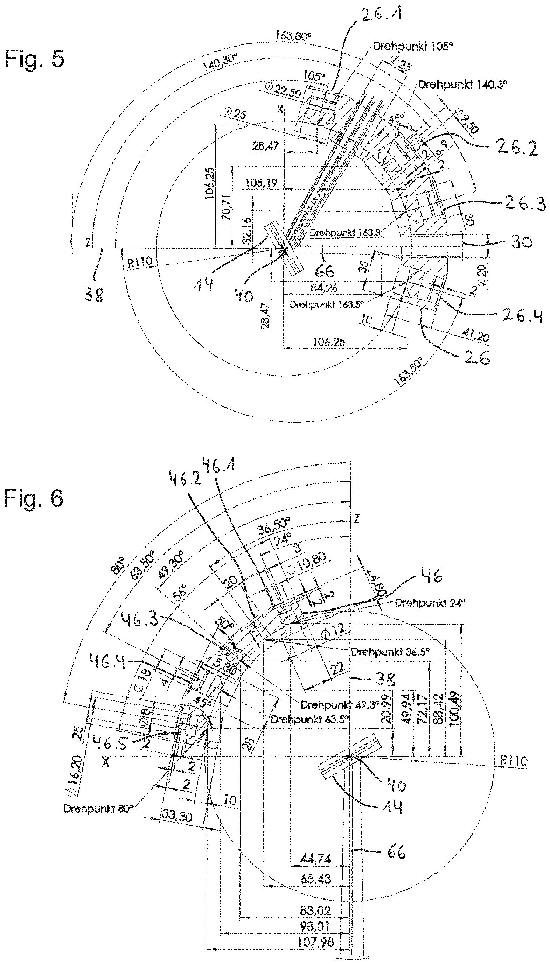

Strahlabwärts der Messzelle 14 ist in Strahlrichtung auf der linken Seite ein Detektorbogen 46 mit fünf Großwinkel-Vorwärtsstreuungsdetektoren 46.1-46.5 angeordnet. Der Detektorbogen 26 und der Detektorbogen 46 haben denselben Bogenradius R (vgl. Fig. 4-6) zum Streuzentrum 40, welches sich im Mittelpunkt der Messzelle 14 befindet, und bilden Kreissegmente um das Streuzentrum 40.

Weiter strahlabwärts in Vorwärtsrichtung liegt der Vorwärtssensor 56 und zwar auf der optischen Hauptachse 38 und weist eine Strahldurchgangsöffnung auf, damit der Primärlichtstrahl durch den Vorwärtssensor 56 hindurchtreten kann. Der Vorwärtssensor 56 ist auf einem x-y-Verschiebeschlitten 58 auf dem Messtisch 22 montiert, um den Vorwärtssensor 56 in beiden Richtungen x und y transversal zu dem Primärlichtstrahl bzw. zu der optischen Hauptachse 38 justieren zu können, um den Primärlichtstrahl exakt durch die Strahldurchgangsöffnung fädeln zu können.

Wie in der Fig. 2 ersichtlich ist, ist die Messzelle 14 in der Messebene, d.h. um eine Drehachse durch das Streuzentrum 40 und senkrecht zur Messebene bzw. zum Messtisch 22 um einen Schrägstellungswinkel κ gedreht, positioniert (in Fig. 2 verläuft die Drehachse also senkrecht zur Zeichenebene). Im vorliegenden Beispiel beträgt dieser Schrägstellungswinkel κ = 30°. Ferner ist die Messzelle 14 seitlich in Richtung des Pfeils 25 aus der Halterung 24 herausziehbar und umgekehrt wieder einsteckbar, zum Beispiel um die Messzelle 14 reinigen zu können oder um eine andere Messzelle in das Partikelgrößenmessgerät 1 einsetzen zu können. Das seitliche Einschieben der Messzelle 14 erfolgt demnach in eine schrägstehende Halterung 24 nach Art einer Schlittenführung. Die Messzelle 14 steht also schräg in dem Gerätegehäuse 12. Die Messzelle 14 kann von der Seite schräg zur optischen Hauptachse 38 durch eine seitliche Öffnung 13 des Gerätegehäuses 12 in das Gerätegehäuse 12 eingesetzt und wieder entnommen werden.

Wie in den Fig. 2,3 und 12 gut zu sehen ist, definiert die Messzelle 14 also eine Messzellenebene 15, die um den Schrägstellungswinkel κ ≠ 0° in der Messebene 23 gedreht ist. Mit anderen Worten schließt die Normale 17 auf der Messzellenebene 15 mit der optischen Hauptachse 38 in der Messebene 23 einen Schrägstellungswinkel κ ≠ 0° ein, wobei der Schrägstellungswinkel in diesem Beispiel κ = 30° beträgt. Anders ausgedrückt ist die Messzelle 14 in der Messebene 23 zur optischen Hauptachse 38, die von der Primärlichtstrahl-Quelle 30 und dem Zentrum 83 des Vorwärtssensors 56 definiert wird, um einen Schrägstellungswinkel κ ≠ 0° schräggestellt, wobei der Schrägstellungswinkel in diesem Beispiel κ = 30° beträgt.

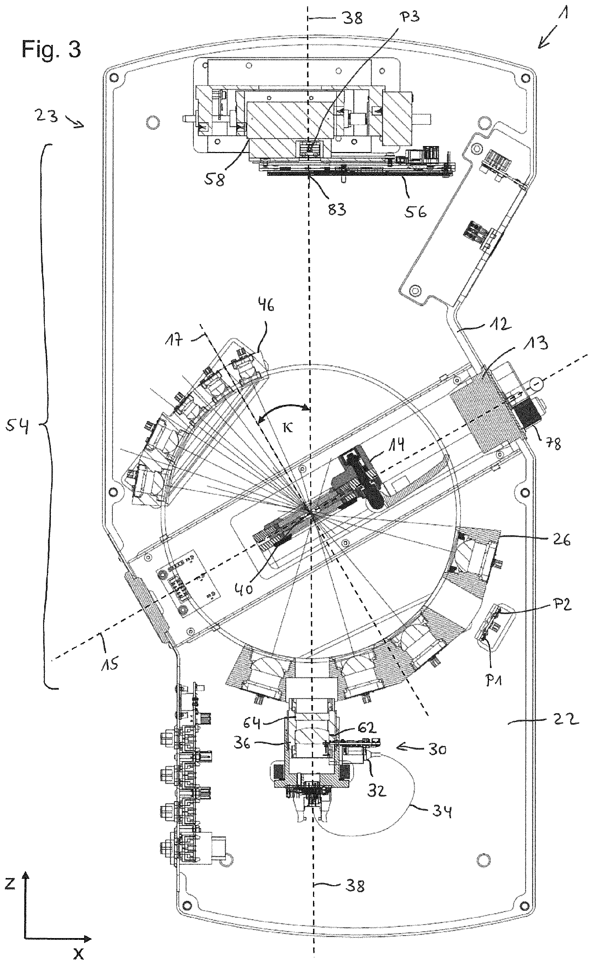

Bezugnehmend auf Fig. 3 umfasst die Lichtquelle 30 bzw. die Strahlverarbeitungseinheit 36 eine konvexe Kollimatorlinse 62, welche den aus der optischen Faser 34 austretenden divergenten Lichtstrahl zunächst parallelisiert. In diesem Beispiel wird das Laserlicht von Kollimatorlinse 62 auf einen Strahldurchmesser von etwa 10 mm hinter der Kollimatorlinse 62 kollimiert bzw. parallelisiert. Die Kollimatorlinse 62 ist im vorliegenden Beispiel als Achromat ausgebildet.

Der aus der Kollimatorlinse 62 austretende, aufgeweitete Parallelstrahl wird mittels einer Fokussierlinse 64, welche auch als Fourierlinse bezeichnet werden kann, auf den Vorwärtssensor 56 fokussiert. Mit anderen Worten steht die Messzelle 14 im konvergenten Strahl einer inversen Fourier-Optik. Der Primärlichtstrahl 66, der zusammen mit dem Streuzentrum 40 und dem Zentrum 83 des Vorwärtssensors 56 die optische Hauptachse 38 definiert, ist in Fig. 4 lediglich schematisch als Linie dargestellt. Die Strahlformungseinheit nach der optischen Faser 34 umfasst demnach zumindest zwei Linsen, nämlich die, vorzugsweise achromatische, Kollimatorlinse 62 und die Fokussierlinse 64. Die Kollimatorlinse und die Fourierlinse haben z.B. einen Durchmesser von 25 mm.

Der aus der Laserdiode 32 austretende Laserstrahl weist im Großen und Ganzen einen rechteckigen Querschnitt auf. Durch die Faserkopplung der Laserdiode 32 an die Strahlverarbeitungseinheit 36 bzw. an die Kollimatorlinse 62 wird dieser rechteckige Querschnitt von der optischen Faser in einen im Großen und Ganzen runden Querschnitt umgeformt. Mit einem derart runden Querschnitt des Laserlichts am Eingang der Kollimatorlinse 62 kann eine hohe Qualität des Primärlichtstrahls 66, insbesondere ein guter Fokus erzielt werden.

Bezugnehmend auf Fig. 4 durchstrahlt der aus der Lichtquelle 30 austretende fokussierte Primärlichtstrahl 66 nun die Messzelle 14 und definiert damit das Streuzentrum 40 in dem Probenvolumen 74. Hierzu tritt der Primärlichtstrahl 66 durch das Eintrittsfenster 72 in das Probenvolumen 74 innerhalb der Messzelle 14 ein und tritt auf der strahlabwärts gelegenen Rückseite der Messzelle 14 durch das Austrittsfenster 76 wieder aus der Messzelle 14 aus. Durch das Probenvolumen 74 der Messezelle 14 strömt im Durchflussbetrieb die zu untersuchende Dispersion mit den zu untersuchenden Partikeln. Hierzu weist die Messzelle zwei Anschlussstutzen 78 zum Ein- und Ausleiten der Dispersion auf, von denen in den Fig. 2-4 nur einer zu sehen ist.

Das Primärlicht des Primärlichtstrahls 66 wird nun in dem Probenraum 74 an den Partikeln der zu untersuchenden Dispersion gestreut bzw. gebeugt, so dass ausgehend von dem Streuzentrum 40 ein Beugungsmuster bzw. eine Streuwinkelverteilung des gebeugten Lichts entsteht. Die Streuwinkelverteilung wird nun in der Messebene mit einer Vielzahl von Sensoren der Detektoreinrichtung 54, die den Vorwärtssensor 56, die Großwinkel-Vorwärtsstreuungsdetektoren im strahlabwärtigen Vorwärtsbogen 46 und die Rückstreudetektoren in dem strahlaufwärtsgelegenen Rückstreudetektorbogen 26 umfasst, aufgenommen.

Der Rückstreudetektorbogen 26 weist vier Rückstreudetektoren 26.1-26.4 bei den Rückstreuwinkeln 105°, 140,3°, 163,8° und -163,5° auf. Jeder Rückstrahldetektor 26.1 - 26.4 weist eine Streulichtsammellinse 27.1 - 27.4 sowie einen Sensor 28.1 -28.4 auf. Die Streulichtsammellinsen 27.1 - 27.4 sammeln Streulicht aus einem ausreichenden Raumwinkelbereich, um ein ausreichend großes Messsignal zu erhalten. Die Streulichtsammellinsen 27.1-27.4 sind als asphärische Linsen ausgebildet und weisen in diesem Beispiel einen Durchmesser von 35mm auf. Der Bogenradius R bzw. Abstand der Rückstreudetektoren 26.1 - 26.4 beträgt in diesem Beispiel 110 mm.

In dem Großwinkel-Vorwärtsstreuungsdetektorbogen 46 befinden sich fünf Großwinkel-Vorwärtsstreuungsdetektoren 46.1 - 46.5 bei Streuwinkeln von 24°, 36,5°, 49,3°, 63,5° und 80°. Auch die Großwinkel-Vorwärtsstreuungsdetektoren 46.1-46-5 weisen jeweils eine Streulichtsammellinse 47.1. - 47.5 auf, welche jedoch mit einem Durchmesser 12 mm (47.1-47.3) und 18 mm (47.4-47.5) kleiner als die Streulichtsammellinsen 27.1-27.4 der Rückstreudetektoren 26.1-26.4 sind. Die Streulichtsammellinsen 47.1-47.5 sind ebenfalls als asphärische Linsen ausgebildet. Jeder Großwinkel-Vorwärtsstreuungsdetektor 46.1-46.5 weist ferner einen Sensor 48.1-48.5 auf. Der Abstand der Großwinkel-Vorwärtsstreuungsdetektoren 46.1-46.5 bezogen auf die Streulichtsammellinsen 47.1-47.5 beträgt ebenfalls 110 mm zum Streuzentrum 40. Somit bilden die beiden Detektorbögen 26 und 46 jeweils Kreissegmente um das Streuzentrum 40 mit Detektoren bei den genannten Streuwinkeln.

Als Streulichtsammellinsen bzw. Eintrittslinsen 27.1 - 27.4 und 47.1 - 47.5 an den Rückstreudetektoren und den Großwinkel-Vorwärtsstreuungsdetektoren werden asphärische Linsen von der Firma Thorlabs (Typ: AL2520M-A) verwendet. Diese Linsen sind gefasst und haben einen freien Durchmesser von 25 mm bzw. 12 mm/18 mm, wodurch sich ein Messvolumen erfassen lässt, das der Größe eines Strahls entspricht, der mehr als 95% der Leistung eines Gauß-Strahls mit 10 mm bei 1/e² enthält.

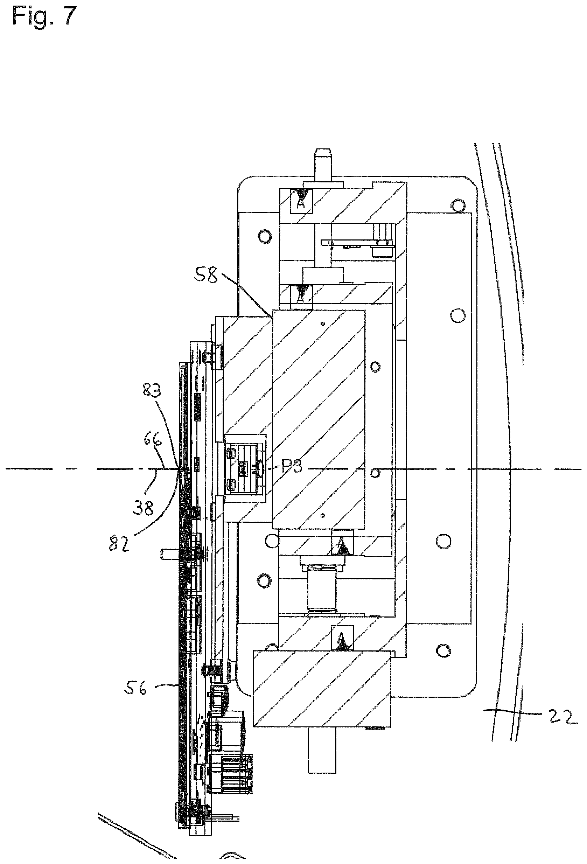

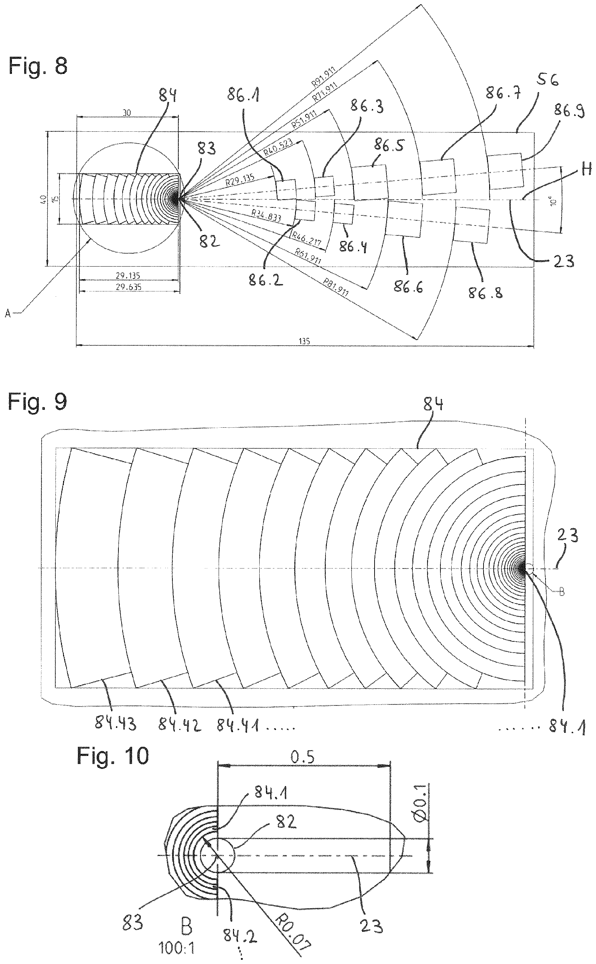

Bezugnehmend auf die Fig.7 - 10 ist der Vorwärtssensor 56 auf der optischen Hauptachse 38 angeordnet, wobei der Primärlichtstrahl 66 durch die Strahldurchgangsöffnung 82, wie am besten in Fig. 10 zu sehen ist, hindurchtritt. Die Strahldurchgangsöffnung 82 weist einen Durchmesser von 100 µm auf. Der Primärlichtstrahl 66 wird hinter der Strahldurchgangsöffnung 82 bzw. hinter dem Vorwärtssensor 56 von einer Fotodiode P3 überwacht. Der Primärlichtstrahl 66 ist also auf die Strahldurchgangsöffnung 82 fokussiert und hat dort einen Strahldurchmesser, der kleiner ist, als der Durchmesser der Strahldurchgangsöffnung 82.

Der Vorwärtssensor 56 besteht aus einem speziell angefertigten Hauptsensor 84 und neun assemblierten Einzeldetektoren 86 auf der gegenüberliegenden Seite der Strahldurchgangsöffnung 82. Der Hauptsensor 84 besteht aus 43 konzentrisch um die Strahldurchgangsöffnung 82 angeordneten Ringsegment-förmigen Sensorflächen 84.1 - 84.43, welche einen Streuwinkelbereich von etwa 0,28 mrad bis etwa 6,5° abdecken. Der Zusammenhang zwischen Partikelgröße und Sensorradius kann näherungsweise wie folgt beschrieben werden: Partikeldurchmesser = 1.81 * Wellenlänge * Abstand der Messzelle * 2000 / (2 * π * Sensorradius). Die inneren der Ringsegmente 84.1 - 84.43 decken dabei einen Ringwinkel von 180° um die Strahldurchgangsöffnung 82 ab und die äußeren Ringsegmente bis zum äußersten Ringsegment 84.43 einen immer kleiner werdenden Ringwinkel.

Die assemblierten Einzeldetektoren 86 teilen sich auf in eine erste innere Gruppe 86.1 - 86.4 mit einer Größe von jeweils 5 x 5 mm und eine zweite äußere Gruppe 86.5 - 86.9 mit einer Sensorfläche von 10 x 10 mm. Die assemblierten Einzeldetektoren 86 liegen auf der dem Hauptsensor 84 gegenüberliegenden Seite der Strahldurchgangsöffnung 82 und setzen den Streuwinkelbereich von etwa 6,5° bis etwa 22° fort. Um den Streuwinkelbereich optimal abzudecken, sind die assemblierten Einzeldetektoren 86.1-86.9 abwechselnd vertikal versetzt, um einen vertikalen Winkel von jeweils +/- 5° zur Horizontalen H bzw. zur Messebene 23. Die assemblierten Einzeldetektoren 86.1-86.9 werden aus den Resten des Wafers, die bei der Herstellung des Hauptsensors 84 entstehen, geschnitten und zusammen mit dem Hauptsensor 84 aufgeklebt und gebondet, wodurch der Wafer optimal ausgenutzt und damit Kosten eingespart werden können.

Die Detektoreinrichtung 54 umfasst demnach insgesamt 64 Sensoren, das sind die 43 Sensoren des Hauptsensors 84, die 9 Sensoren der assemblierten Einzeldetektoren 86.1 -86.9, die 4 Sensoren der Rückstrahldetektoren 26.1-26.4 sowie die 5 Sensoren der Großwinkel-Vorwärtsstreuungsdetektoren 46.1-46.5 sowie die drei Sensoren der drei Fotodioden P1-P3. Diese 64 Sensoren können 8-stückweise mit 8 Kanälen parallel bzw. gleichzeitig angestoßen werden, was eine schnelle Auswertung ermöglicht.

Mit der Gesamtheit der Detektoreinrichtung 54, die im vorliegenden Beispiel aus dem Vorwärtssensor 56 mit der Strahldurchgangsöffnung 82 auf der optischen Hauptachse 38, dem Hauptsensor 84 und den Einzeldetektoren 86, dem Großwinkel-Vorwärtsstreuungsdetektoren 46.1-46.5, den Rückstreudetektoren 26.1-26.4 sowie den Fotodioden zum Strahl-Monitoring besteht, kann ein großer Teil der Streuwinkel und somit ein großes Messintervall abgedeckt werden, obwohl die Brennweite des optischen Systems relativ kurz ist. Die Brennweite des optischen Systems beträgt nämlich in diesem Beispiel von der Lichtquelle 30 bzw. von der Fokussierlinse 64 bis zum Vorwärtssensor 56 lediglich 400 mm. Der Abstand zwischen dem Streuzentrum 40 bzw. der Messzelle 14 und dem Vorwärtssensor 56 beträgt lediglich 250 mm. Dies kann unter anderem durch eine Kombination aus der kompakten Detektor-Anordnung, die wiederum durch die Schrägstellung der Messzelle 14 ermöglicht wird, und der präzisen Fokussierung des Primärlichtstrahls 66 und dem damit verbundenen kleinen Durchmesser der Strahldurchgangsöffnung 82 erzielt werden.

Insgesamt kann mit dem vorliegenden Ausführungsbeispiel mit feststehender Messzelle und mit nur einer einzigen Primärlichtwellenlänge von 532 nm ein Messintervall von 100 nm bis 3,5 mm ggf. sogar von 10 nm bis 3,5 mm erzielt werden
Bezugnehmend auf die Fig. 2-4 ist ersichtlich, dass der Bogenradius der Großwinkel-Vorwärtsstreuungsdetektoren 46.1-46.5 sowie der Rückstreudetektoren 26.1-26.4 mit 110 mm kleiner ist, als die laterale Ausdehnung der Messzelle 14 bzw. ihrer Halterung 24. Mit anderen Worten schneidet die Messzelle 14 bzw. die Halterung 24 der Messzelle 14 den Bogenradius R der Detektorbögen 26 und 46. Trotzdem kann z.B. mit dem Detektor 26.1 bei einem Streuwinkel von 105° und mit dem Detektor 46.5 bei einem Streuwinkel von 80° gemessen werden, was bei einer Messzelle, die senkrecht zur optischen Hauptachse 38 ausgerichtet wäre, nicht, oder zumindest nicht ohne seitliche Austrittsprismen möglich wäre.

Dies ist insbesondere deshalb möglich, weil die Messzelle 14 unter einem Schrägstellungswinkel, welcher im vorliegenden Beispiel 30° beträgt, in der Messebene gedreht, bzw. schräg gestellt angeordnet ist. Ein Schrägstellungswinkel im Bereich von etwa κ = 30° hat sich als guter Kompromiss zwischen dem durch die Strahlbrechung erzeugten Strahlversatz und der Anordnungsmöglichkeit für die verschiedenen Detektoren herausgestellt.

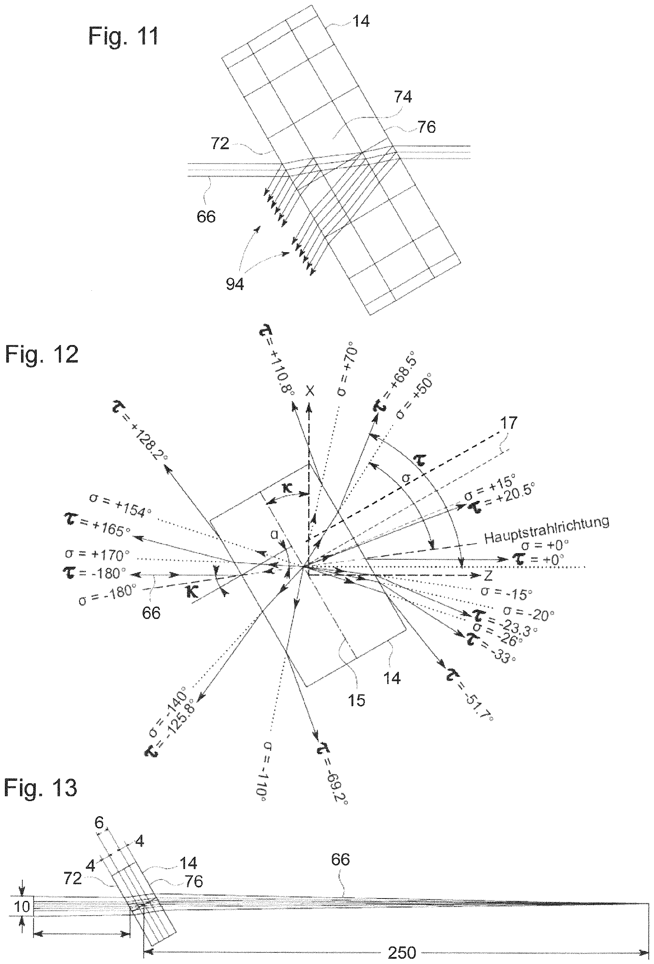

Bezugnehmend auf die Fig. 11-13 erzeugt die Schrägstellung der Messzelle um den besagten Winkel κ = 30° auf Grund der Brechung am Eintritts- und Austrittsfenster 72, 76 zwar einen gewissen Strahlversatz, dieser kann jedoch durch entsprechende Positionierung des Vorwärtssensors 56 kompensiert werden. Um eine präzise Positionierung des Vorwärtssensors 56 relativ zu dem Primärlichtstrahl 66 zu erreichen, ist der Vorwärtssensor 56 auf dem x-y-Schlitten 58 montiert, mittels welchem der Vorwärtssensor 56 in x- und y-Richtung, also in beiden Richtungen quer zum Primärlichtstrahl 66 justiert werden kann, damit der Primärlichtstrahl 66 genau auf die Strahldurchgangsöffnung 82 gerichtet werden kann. Die Lichtquelle 30 braucht daher nicht justierbar zu sein. Mit der x-y-Justierung 58 des Vorwärtssensors 56 kann auch ein veränderter Strahlversatz, z.B. auf Grund neuer Messzellenfenster 72, 76 oder auf Grund eines veränderten Brechungsindexes bei unterschiedlichen Dispersionsmedien exakt kompensiert werden.

Bezugnehmend auf die Fig.11 entsteht an den Grenzflächen, d.h. an den Innen- und Außenseiten des Eintrittsfensters und des Austrittsfensters 72, 76 Reflexion des Primärlichtstrahls, welche durch die Pfeile 94 symbolisiert ist. Diese Reflexe 94 können nun in vorteilhafter Weise zum Überwachen des Primärlichtstrahls 66 verwendet werden. Bezugnehmend auf die Fig. 2-4 befinden sich hierzu zwei Fotodioden P1 und P2 unter dem doppelten Schrägstellungswinkel κ. Die beiden Fotodioden P1 und P2 sitzen nebeneinander hinter einer Öffnung 96 in dem Rückstreudetektorbogen 26. Die erste Fotodiode P1 detektiert das reflektierte Licht an den Grenzflächen des Eintrittsfensters 72 und die zweite Fotodiode P2 detektiert das reflektierte Licht an den Grenzflächen des Austrittsfensters 76. Mit dem reflektierten Strahl an der Außenseite des Eintrittsfensters 72 (R1) kann über die Fotodiode P1 insbesondere die Leistung des Lasers überwacht werden (Monitor-Diode). Mit dem reflektierten Strahl an der Außenseite des Austrittsfensters 76 (R2) kann über die Fotodiode P2 insbesondere die Strahlabsorption überwacht werden.

Die beiden Messzellengläser 72, 76 sind ferner außen reflexmindernd beschichtet. Dadurch weisen die insgesamt vier entstehenden Reflexe an den vier Grenzflächen des Eintritts- und Austrittsfensters 72, 76 an der Außenseite des Eintrittsfensters 72 und an der Außenseite des Austrittsfensters 76 jeweils einen dunkleren Reflex und an der Innenseite des Eintrittsfensters 72 und an der Innenseite des Austrittsfensters 76 jeweils einen helleren Reflex. An der Symmetrie der Reflexe kann so sogar überprüft werden, ob die Messzellengläser 72, 76 richtig herum eingebaut sind, oder ob eine der beschichteten Flächen fehlerhafterweise nach innen zeigt.

Zusätzlich wird mit der Fotodiode P3 hinter der Strahldurchgangsöffnung 82 die Lichtabsorption überwacht. Dieser Wert korreliert mit der Lichtabsorption, die mit der Fotodiode P2 überwacht wird, wodurch eine Redundanz in der Strahlüberwachung geschaffen wird.

Ferner ist ersichtlich, dass auf Grund der Schrägstellung der Messzelle 14, in diesem Beispiel um 30°, das an den Grenzflächen reflektierte Licht nicht in die Lichtquelle 30, und insbesondere nicht in die optische Faser 34 zurück reflektiert wird, so dass die Regelung des Lasers 32 nicht beeinträchtigt wird.

Wie bereits vorstehend ausgeführt wurde, bringt die Schrägstellung der Messzelle 14 um einen Winkel von κ = 30° in vorteilhafter Weise mehr Platz für die Anordnung der Großwinkel-Vorwärtsstreuungsdetektoren und der Rückstreudetektoren. Außerdem sind die Austrittswinkel aus den Fenstern 72, 76 der Messzelle 14 heraus auf jeweils einer der beiden Seiten der optischen Hauptachse 38 um 30° reduziert, so dass das Streulicht bei Winkeln aus der Messzelle 14 austreten und nachgewiesen werden kann, die näher am 90°-Winkel liegen, als dies bei einer senkrecht zur optischen Hauptachse 38 angeordneten Messzelle 14 der Fall wäre.

Andererseits wird so ein Astigmatismus erzeugt, der eine solche Schrägstellung der Messzelle 14 zunächst als höchst problematisch erscheinen lassen könnte.

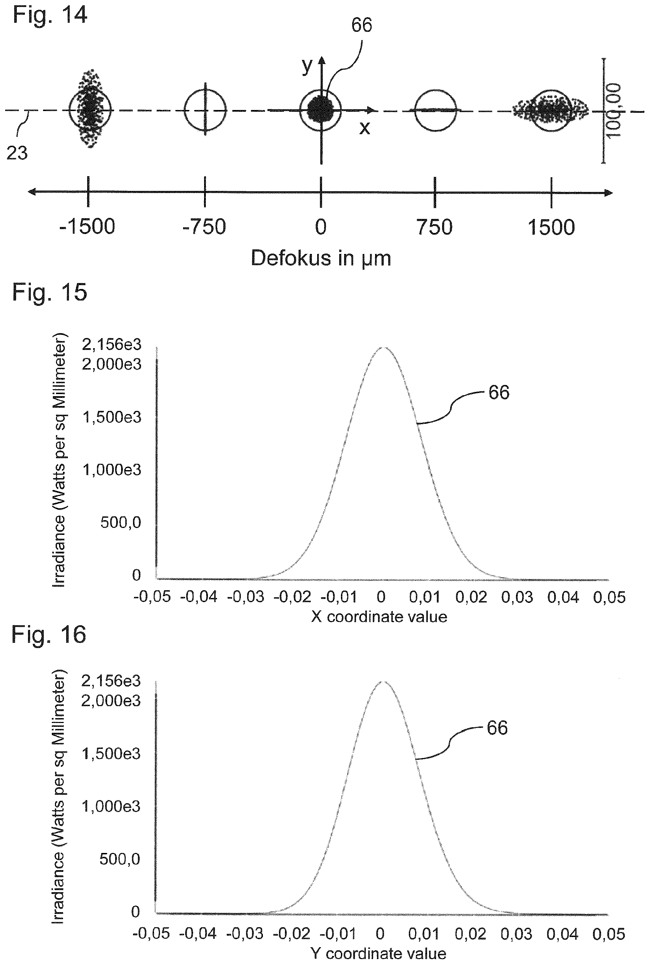

Bezugnehmend auf die Fig. 14-16 wurde dieser Astigmatismus untersucht, welcher durch die Schrägstellung der Messzelle 14 erzeugt wird.

Die Grundlage für den Astigmatismus sind die Brechungsindices des verwendeten Glases für das Eintritts- und Austrittsfenster 72, 76, sowie des Dispersionsmediums im Probenvolumen 74. Die Eintritts- und Austrittsfenster 72, 76 bestehen aus dem Glas N-BK7, welches bei der verwendeten Wellenlänge von 532 nm einen Brechungsindex von n = 1,51947 aufweist. Der Brechungsindex von Wasser als typischem Dispersionsmedium beträgt bei der Wellenlänge von 532 nm n = 1,335. Die Dicke der Eintritts- und Austrittsfenster 72, 76 beträgt jeweils 4 mm und die Dicke des Probenvolumens 74 beträgt 6 mm, wie auch schematisch in Fig. 13 dargestellt ist.

Fig. 14 zeigt die in einer Simulation ermittelten Strahlquerschnitte als Funktion der Entfernung vom Streuzentrum 40, also entlang der optischen Hauptachse 38. Bei -750 µm ist der Primärlichtstrahl 66 in der x-Richtung, also horizontal zur Messebene 23 fokussiert. Dort ist der Primärlichtstrahl 66 allerdings in der y-Richtung, also senkrecht zur Messebene 23, deutlich defokussiert. Umgekehrt verhält sich der Fokus bei +750 µm, wo der Primärlichtstrahl 66 in der y-Richtung, nicht jedoch in der x-Richtung optimal fokussiert ist. Geht man weiter aus dem Fokus heraus, wie dies bei +/- 1500 µm zu sehen ist, ist der Primärlichtstrahl noch stärker defokussiert.

Die Sensoroberfläche des Vorwärtssensors 56 ist nun in Strahlrichtung (z) so angeordnet, dass sie sich im Bereich des Kreises kleinster Verwirrung befindet, was in der Darstellung der Position z = 0 entspricht. Hier ist der Primärlichtstrahl 66 trotz des durch die Schrägstellung der Messzelle 14 erzeugten Astigmatismus im Großen und Ganzen rund und kann gut auf die Strahldurchgangsöffnung 82 fokussiert werden.

Die Fig. 15 und 16 zeigen die simulierten Querschnitte durch den Strahldurchmesser bei z = 0 in Fig. 14. Der 1/e²-Strahldurchmesser am Vorwärtssensor 56 beträgt hier 33,6 µm in x-Richtung und 30,8 µm in y-Richtung.

Damit belegen die durchgeführten Simulationen, dass der erzeugte Astigmatismus in höchst überraschender Weise handhabbar ist.

## Patentansprüche

1. Gerät (1) zur Messung der Partikelgrößenverteilung von Probenmaterial mittels Lichtbeugung, wobei das Gerät eine optische Hauptachse (38) und eine Messebene (23) definiert und Folgendes umfasst:
eine Lichtquelle (30) zur Erzeugung eines Primärlichtstrahls (66),
eine Messzelle (14) mit einem Eintrittsfenster (72) und einem Austrittsfenster (76), wobei das Eintrittsfenster (72) und das Austrittsfenster (76) einen Probenraum (74) beidseits begrenzen, um das Probenmaterial in dem Probenraum (74) zwischen dem Eintrittsfenster (72) und dem Austrittsfenster (76) mit dem Primärlichtstrahl (66) zu bestrahlen und ein Beugungsmuster des Probenmaterials zu erzeugen, wenn die Messzelle (14) im Strahlengang des Primärlichtstrahls (66) angeordnet ist, wobei der Primärlichtstrahl (66) durch das Eintrittsfenster (72) in den Probenraum (74) eintritt und an der Probe in dem Probenraum (74) gebeugtes Sekundärlicht aus dem Eintrittsfenster (72) und/oder aus dem Austrittsfenster (76) austritt,
wobei die Messzelle (14) eine Messzellenebene (15) definiert,
eine Detektoreinrichtung (54) zum Nachweisen des von dem Probenmaterial erzeugten Beugungsmusters,
wobei die Detektoreinrichtung (54) eine Mehrzahl von Sensorflächen (84.1-84.43, 86.1-86.9, 48.1-48.5, 28.1-28.4) unter verschiedenen Beugungswinkeln in der Messebene (23) aufweist, um das Beugungslicht aus der Messzelle (14) unter verschiedenen Beugungswinkeln in der Messebene (23) nachweisen zu können,
wobei die Detektoreinrichtung (54) einen Vorwärtssensor (56) mit einem Hauptsensor (84) in Vorwärtsrichtung auf der optischen Hauptachse (38) aufweist, wobei die Lichtquelle (30), die Messzelle (14) und der Vorwärtssensor (56) die optische Hauptachse (38) definieren,
wobei die Messzelle (14) in der Messebene (23) schräg (κ ≠ 0°) zu der optischen Hauptachse (38) ausgerichtet ist, **dadurch gekennzeichnet, dass** der Vorwärtssensor (56) eine Strahldurchgangsöffnung (82) für den Primärlichtstrahl (66) aufweist und dass der Vorwärtssensor (56) mit der Strahldurchgangsöffnung (82) bezogen auf Primärlichtstrahl (66) vor der Messzelle (14) in der Messebene (23) lateral versetzt ist, um den Strahlversatz aufgrund der Lichtbrechung des Primärlichtstrahls (66) am Eintrittsfenster (72) und Austrittsfenster (76) der schräggestellten Messzelle zu kompensieren.

2. Gerät (1) nach Anspruch 1,
wobei der Schrägstellungswinkel (κ) in der Messebene (23) zwischen der Normalen (17) auf der Messzellenebene (15) und der optischen Hauptachse (38) im Bereich zwischen 5° und 62°, vorzugsweise im Bereich zwischen 10° und 50°, vorzugsweise im Bereich zwischen 15° und 45°, vorzugsweise 30° +/- 10°, vorzugsweise +/- 5° beträgt.

3. Gerät (1) nach einem der vorstehenden Ansprüche,
wobei eine Fokussieroptik (62, 64) umfasst ist, welche den Primärlichtstrahl (66) auf den Vorwärtssensor (56) fokussiert.

4. Gerät (1) nach einem der vorstehenden Ansprüche,
wobei der Abstand des Vorwärtssensors (56) von der Lichtquelle (30) im Bereich zwischen 200 mm bis 600 mm, vorzugsweise im Bereich zwischen 300 mm und 500 mm, vorzugsweise 400 mm +/- 50 mm beträgt und/oder
wobei der Abstand des Vorwärtssensors (56) vom Mittelpunkt (40) der Messzelle (14) im Bereich zwischen 50 mm bis 450 mm, vorzugsweise im Bereich zwischen 150 mm und 350 mm, vorzugsweise 250 mm +/- 50 mm beträgt.

5. Gerät (1) nach einem der vorstehenden Ansprüche,
wobei der Hauptsensor (84) eine Vielzahl von einzeln auslesbaren Sensorflächen (84.1-84.43) in Form von konzentrischen Ringsegmenten, vorzugsweise in einem Streuwinkelbereich zwischen der Strahldurchgangsöffnung und 6,5° umfasst und/oder
wobei der Vorwärtssensor (56) eine Mehrzahl von assemblierten Einzeldetektoren (86.1-86.9), vorzugsweise in einem Streuwinkelbereich zwischen 6,5° und 22° aufweist, welche vorzugsweise in der Messebene (23) auf der, dem Hauptsensor (84) gegenüberliegenden Seite der Strahldurchgangsöffnung (82) angeordnet ist,
insbesondere wobei die assemblierten Einzeldetektoren (86.1-86.9) in zumindest eine erste Gruppe (86.1-86.4) und eine zweite Gruppe (86.5-86.9) aufgeteilt sind, wobei die Sensoren der ersten Gruppe bei kleineren Streuwinkeln als die Sensoren der zweiten Gruppe angeordnet sind und die Sensoren der ersten Gruppe kleiner als die Sensoren der zweiten Gruppe sind.

6. Gerät (1) nach einem der vorstehenden Ansprüche,
wobei die Detektoreinrichtung (54) zumindest einen Großwinkel-Vorwärtsstreuungsdetektor (46.1-46.5) unter einem Vorwärtstreuwinkel von größer als 20° umfasst und/oder zumindest einen Rückstreudetektor (26.1-26.4) unter einem Rückwärtsstreuwinkel umfasst.

7. Gerät (1) nach einem der vorstehenden Ansprüche, wobei mehrere Großwinkel-Vorwärtsstreuungsdetektoren (46.1-46.5) und/oder mehrere Rückstreudetektoren (26.1-26.4) umfasst sind, die auf einem Detektorbogen mit einem Bogenradius (R) um den Mittelpunkt (40) der Messzelle (14) angeordnet sind und wobei der Bogenradius (R) kleiner ist, als der Abstand des Vorwärtssensors (56) von der Lichtquelle (30) und/oder kleiner ist, als der Abstand des Vorwärtssensors (56) von der Messzelle (14).

8. Gerät (1) nach einem der vorstehenden Ansprüche,
wobei mehrere Großwinkel-Vorwärtsstreuungsdetektoren (46.1-46.5) und/oder mehrere Rückstreudetektoren (26.1-26.4) umfasst sind und auf einem Detektorbogen mit einem Bogenradius (R) um den Mittelpunkt (40) der Messzelle (14) angeordnet sind und wobei der Bogenradius (R) im Bereich zwischen 50 mm und 200 mm, vorzugsweise im Bereich zwischen 75 mm und 150 mm, vorzugsweise 110 mm +/- 25 mm beträgt,
insbesondere wobei die Großwinkel-Vorwärtsstreuungsdetektoren (46.1-46.5) unter einem, mehreren oder allen der folgenden Streuwinkel angeordnet sind:
24° +/-10°,
36,5° +/- 10°,
49,3° +/- 10°,
63,5° +/- 10°,
80° +/- 10°
und/oder wobei die Rückstreudetektoren (26.1-26.4) unter einem, mehreren oder allen der folgenden Streuwinkel angeordnet sind:
105° +/-15°,
140,3° +/- 15°,
163,8° +/-15°,
-163,5° +/-15°.

9. Gerät (1) nach einem der vorstehenden Ansprüche,
wobei zumindest eine Monitor-Fotodiode (P1, P2) zum Überwachen des an zumindest einer, an mehreren oder allen der folgenden Flächen reflektierten Primärlichtstrahls (66) umfasst ist:
Außenseite des Eintrittsfensters (72),
Innenseite des Eintrittsfensters (72),
Innenseite des Austrittsfensters (76),
Außenseite des Austrittsfensters (76),
wobei insbesondere eine erste Fotodiode (P1) zum Überwachen des an einer oder beiden der folgenden Flächen reflektierten Primärlichtstrahls (66) umfasst ist:
Außenseite des Eintrittsfensters (72),
Innenseite des Eintrittsfensters (72),
und/oder eine zweite Fotodiode (P2) zum Überwachen des an einer oder beiden der folgenden Flächen reflektierten Primärlichtstrahls (66) umfasst ist:
Innenseite des Austrittsfensters (76),
Außenseite des Austrittsfensters (76).

10. Gerät (1) nach einem der vorstehenden Ansprüche, wobei eines, mehrere oder alle der folgenden Kriterien erfüllt sind:
der Primärlichtstrahl (66) ist monochromatisch und die Wellenlänge λ des monochromatischen Lichts beträgt im Bereich zwischen 380 nm und 680 nm, vorzugsweise zwischen 480 nm und 580 nm, vorzugsweise λ = 532 nm +/-25 nm,
die Lichtquelle (30) umfasst eine optische Faser (34) und einen Laser (32), welcher mittels der optischen Faser (34) an die Fokussieroptik (62, 64) fasergekoppelt ist, wobei die optische Faser (34) insbesondere als eine polarisationserhaltende Single-Mode-Faser ausgebildet ist.
der Primärlichtstrahl (66) ist senkrecht zur Messebene (23) polarisiert,
die Lichtquelle (30) umfasst nur einen einzigen Laser, vorzugsweise eine grüne Laserdiode (32) als Primärlichtquelle.

11. Gerät (1) nach einem der vorstehenden Ansprüche,
wobei ein Kollimator mit einer Kollimatorlinse (62) und eine Fokussierlinse (64) umfasst sind, wobei die Fokussierlinse (64) den Primärlichtstrahl (66) auf den Vorwärtssensor (56) fokussiert, wobei die Fokussierlinse (64) insbesondere am Ausgang der Lichtquelle (30) unmittelbar nach der Kollimatorlinse (62) angeordnet ist.

12. Gerät (1) nach Anspruch 11,
wobei die Brennweite der Fokussierlinse (64) im Bereich zwischen 200 mm bis 600 mm, vorzugsweise im Bereich zwischen 300 mm und 500 mm, vorzugsweise 400 mm +/- 50 mm beträgt und/oder.
wobei der 1/e²-Strahldurchmesser des Primärlichtstrahls (66) nach der Kollimatorlinse (62) im Bereich zwischen 3 mm und 20 mm, vorzugsweise 10 mm +/- 5 mm beträgt.

13. Gerät (1) nach einem der vorstehenden Ansprüche,
wobei der Brechungsindex des transparenten Materials des Eintrittsfensters (72) und/oder des Austrittsfensters (76) n_{F} <= 1,6, vorzugsweise n_{F} <= 1,55, vorzugsweise n_{F} = 1,51 +/- 0,5 beträgt.

14. Gerät (1) nach einem der vorstehenden Ansprüche,
wobei zumindest eines oder mehrere der folgenden Kriterien erfüllt sind:
der Strahldurchmesser des fokussierten Primärlichtstrahls (66) am Hauptsensor (84) beträgt in beiden Strahlquerschnitten (x, y) senkrecht zur optischen Hauptachse <= 60 µm, vorzugsweise <= 45 µm, vorzugsweise 32 µm +/- 10 µm,
der fokussierte Primärlichtstrahl (66) weist im Bereich des Hauptsensors (84) einen Astigmatismus auf und der Hauptsensor (84) ist entlang der optischen Hauptachse (38) zwischen den vom Astigmatismus verursachten beiden Brennlinien des Primärlichtstrahls (66) angeordnet, wobei der Hauptsensor (84) vorzugsweise am Ort des Kreises kleinster Verwirrung angeordnet ist,
der fokussierte Primärlichtstrahl (66) weist im Bereich des Hauptsensors (84) einen Astigmatismus auf und der horizontale und der vertikale Strahldurchmesser unterscheiden sich am Hauptsensor (84) um weniger als 50%, vorzugsweise weniger als 30%, vorzugsweise weniger als 20%, vorzugsweise um 9 % +/- 5%-Punkte.

## Claims

1. Device (1) for measuring the particle size distribution of sample material by means of light diffraction, wherein the device defines a main optical axis (38) and a measuring plane (23) and comprises:
a light source (30) for generating a primary light beam (66),
a measuring cell (14) having an inlet window (72) and an outlet window (76), wherein the inlet window (72) and the outlet window (76) delimit a sample space (74) on both sides, in order to irradiate the sample material in the sample space (74) with the primary light beam (66) between the inlet window (72) and the outlet window (76) and to generate a diffraction pattern of the sample material when the measuring cell (14) is arranged in the beam path of the primary light beam (66), wherein the primary light beam (66) enters the sample space (74) through the inlet window (72) and secondary light, diffracted on the sample in the sample space (74), exits out of the inlet window (72) and/or out of the outlet window (76),
wherein the measuring cell (14) defines a measuring cell plane (15),
a detector device (54) for detecting the diffraction pattern generated by the sample material,
wherein the detector device (54) comprises a plurality of sensor surfaces (84.1-84.43, 86.1-86.9, 48.1-48.5, 28.1-28.4) at different diffraction angles in the measuring plane (23), in order to be able to detect the diffraction light from the measuring cell (14) at different diffraction angles in the measuring plane (23),
wherein the detector device (54) comprises a forward sensor (56) having a main sensor (84) in the forward direction on the main optical axis (38), wherein the light source (30), the measuring cell (14) and the forward sensor (56) define the main optical axis (38),
wherein the measuring cell (14) is oriented in the measuring plane (23) obliquely (κ ≠ 0°) to the main optical axis (38),
**characterised in that**
the forward sensor (56) comprises a beam passage opening (82) for the primary light beam (66), and **in that**
the forward sensor (56) having the beam passage opening (82) is laterally offset in front of the measuring cell (14), in the measuring plane (23), based on the primary light beam (66), in order to compensate the beam offset on account of the light diffraction of the primary light beam (66) at the inlet window (72) and outlet window (76) of the oblique measuring cell.

2. Device (1) according to claim 1,
wherein the tilt angle (κ) in the measuring plane (23) between the normal (17) on the measuring cell plane (15) and the main optical axis (38) is in the range between 5° and 62°, preferably in the range between 10° and 50°, preferably in the range between 15° and 45°, is preferably 30° +/-10°, preferably +/- 5°.

3. Device (1) according to any one of the preceding claims,
wherein focussing optics (62, 64) is included, which focusses the primary light beam (66) onto the forward sensor (56).

4. Device (1) according to any one of the preceding claims,
wherein the spacing of the forward sensor (56) from the light source (30) is in the range between 200 mm to 600 mm, preferably in the range between 300 mm and 500 mm, is preferably 400 mm +/- 50 mm, and/or
wherein the spacing of the forward sensor (56) from the centre (40) of the measuring cell (14) is in the range between 50 mm to 450 mm, preferably in the range between 150 mm and 350 mm, is preferably 250 mm +/- 50 mm.

5. Device (1) according to any one of the preceding claims,
wherein the main sensor (84) comprises a plurality of sensor surfaces (84.1-84.43) which can be read out individually and are in the form of concentric ring segments, preferably in a scattering angle range between the beam passage opening and 6.5°, and/or
wherein the forward sensor (56) comprises a plurality of assembled individual detectors (86.1-86.9), preferably in a scattering angle range between 6.5° and 22°, which is preferably arranged in the measuring plane (23) on the side of the beam passage opening (82) opposite the main sensor (84),
in particular wherein the assembled individual detectors (86.1-86.9) are divided into at least a first group (86.1-86.4) and a second group (86.5-86.9), wherein the sensors of the first group are arranged at smaller scattering angles than the sensors of the second group, and the sensors of the first group are smaller than the sensors of the second group.

6. Device (1) according to any one of the preceding claims,
wherein the detector device (54) comprises at least one large angle forward scattering detector (46.1-46.5) at a forward scattering angle of more than 20° and/or at least one backscattering detector (26.1-26.4) at a backscattering angle.

7. Device (1) according to any one of the preceding claims,
wherein a plurality of large angle forward scattering detectors (46.1-46.5) and/or a plurality of backscattering detectors (26.1-26.4) are included, which are arranged on a detector curve having a curve radius (R) about the centre (40) of the measuring cell (14), and wherein the curve radius (R) is smaller than the spacing of the forward sensor (56) from the light source (30) and/or is smaller than the spacing of the forward sensor (56) from the measuring cell (14).

8. Device (1) according to any one of the preceding claims,
wherein a plurality of large angle forward scattering detectors (46.1-46.5) and/or a plurality of backscattering detectors (26.1-26.4) are included and are arranged on a detector curve having a curve radius (R) about the centre (40) of the measuring cell (14), and wherein the curve radius (R) is in the range between 50 mm and 200 mm, preferably in the range between 75 mm and 150 mm, is preferably 110 mm +/- 25 mm,
in particular wherein the large angle forward scattering detectors (46.1-46.5) are arranged at one, a plurality or all of the following scattering angles:
24° +/-10°,
36.5° +/- 10°,
49.3° +/- 10°,
63.5° +/- 10°,
80° +/-10°
and/or wherein the backscattering detectors (26.1-26.4) are arranged at one, a plurality or all of the following scattering angles:
105° +/-15°,
140.3° +/- 15°,
163.8° +/-15°,
-163.5° +/-15°.

9. Device (1) according to any one of the preceding claims,
wherein at least one monitor photodiode (P1, P2) is included, for monitoring the primary light beam (66) reflected at at least one, at a plurality of or at all of the following surfaces:
outer side of the inlet window (72),
inner side of the inlet window (72),
inner side of the outlet window (76),
outer side of the outlet window (76),
wherein in particular a first photodiode (P1) is included for monitoring the primary light beam (66) reflected at one or both of the following surfaces:
outer side of the inlet window (72),
inner side of the inlet window (72),
and/or a second photodiode (P2) is included for monitoring the primary light beam (66) reflected at one or both of the following surfaces:
inner side of the outlet window (76),
outer side of the outlet window (76).

10. Device (1) according to any one of the preceding claims, wherein one, a plurality or all of the following criteria are met:
the primary light beam (66) is monochromatic and the wavelength λ of the monochromatic light is in the range between 380 nm and 680 nm, preferably between 480 nm and 580 nm, preferably λ = 532 nm +/-25 nm,
the light source (30) comprises an optical fibre (34) and a laser (32) which is fibre-coupled to the focussing optics (62, 64) by means of the optical fibre (34), wherein the optical fibre (34) is configured in particular as a polarisation-preserving single-mode fibre,
the primary light beam (66) is polarised perpendicularly to the measuring plane (23),
the light source (30) comprises just one single laser, preferably a green laser diode (32), as the primary light source.

11. Device (1) according to any one of the preceding claims,
wherein a collimator having a collimating lens (62) and a focussing lens (64) is included, wherein the focussing lens (64) focusses the primary light beam (66) onto the forward sensor (56),
wherein the focussing lens (64) is arranged in particular at the output of the light source (30) immediately after the collimating lens (62).

12. Device (1) according to claim 11,
wherein the focal length of the focussing lens (64) is in the range between 200 mm to 600 mm, preferably in the range between 300 mm and 500 mm, is preferably 400 mm +/- 50 mm, and/or
wherein the 1/e² beam diameter of the primary light beam (66) after the collimating lens (62) is in the range between 3 mm and 20 mm, is preferably 10 mm +/- 5 mm.

13. Device (1) according to any one of the preceding claims,
wherein the refractive index of the transparent material of the inlet window (72) and/or of the outlet window (76) is n_{F} <= 1.6, preferably n_{F} <= 1.55, is preferably n_{F} = 1.51 -/+ 0.5.

14. Device (1) according to any one of the preceding claims,
wherein at least one or more of the following criteria are met:
the beam diameter of the focussed primary light beam (66) on the main sensor (84) is, in both beam cross-sections (x, y) perpendicularly to the main optical axis, <= 60 µm, preferably <= 45 µm, preferably 32 µm +/-10 µm,
the focussed primary light beam (66) has an astigmatism in the region of the main sensor (84) and the main sensor (84) is arranged along the main optical axis (38) between the two focal lines of the primary light beam (66) caused by the astigmatism, wherein the main sensor (84) is preferably arranged at the location of the circle of least confusion,
the focussed primary light beam (66) has an astigmatism in the region of the main sensor (84), and the horizontal and the vertical beam diameters differ at the main sensor (84) by less than 50%, preferably less than 30%, preferably less than 20%, preferably by 9% +/- 5 percentage points.

## Revendications

1. Appareil (1) de mesure de la distribution granulométrique d'un matériau d'échantillon par diffraction de la lumière, dans lequel l'appareil définit un axe principal (38) optique et un plan de mesure (23) et comprend ce qui suit :
une source de lumière (30) destinée à générer un rayon de lumière primaire (66),
une cellule de mesure (14) avec une fenêtre d'entrée (72) et une fenêtre de sortie (76), dans lequel la fenêtre d'entrée (72) et la fenêtre de sortie (76) délimitent de part et d'autre une chambre pour échantillon (74) pour exposer au rayon de lumière primaire (66) le matériau d'échantillon dans la chambre pour échantillon (74) entre la fenêtre d'entrée (72) et la fenêtre de sortie (76) et générer un motif de diffraction du matériau d'échantillon lorsque la cellule de mesure (14) est disposée sur le chemin optique du rayon de lumière primaire (66), dans lequel le rayon de lumière primaire (66) entre dans la chambre pour échantillon (74) par la fenêtre d'entrée (72) et de la lumière secondaire diffractée sur l'échantillon dans la chambre pour échantillon (74) sort de la fenêtre d'entrée (72) et/ou de la fenêtre de sortie (76),
dans lequel la cellule de mesure (14) définit un plan de cellule de mesure (15),
un dispositif détecteur (54) destiné à mettre en évidence le motif de diffraction généré par le matériau d'échantillon,
dans lequel le dispositif détecteur (54) présente une multitude de surfaces de capteur (84.1-84.43, 86.1-86.9, 48.1-48.5, 28.1-28.4) à des angles de diffraction différents dans le plan de mesure (23) pour pouvoir mettre en évidence la lumière de diffraction provenant de la cellule de la mesure (14) à des angles de diffraction différents dans le plan de mesure (23),
dans lequel le dispositif détecteur (54) présente un capteur à l'avant (56) avec un capteur principal (84) dans la direction vers l'avant sur l'axe principal (38) optique, dans lequel la source de lumière (30), la cellule de mesure (14) et le capteur à l'avant (56) définissent l'axe principal (38) optique,
dans lequel la cellule de mesure (14) est orientée dans le plan de mesure (23) de manière oblique (k ≠ 0°) par rapport à l'axe principal (38) optique, **caractérisé en ce que**
le capteur à l'avant (56) présente une ouverture de passage de rayon (82) pour le rayon de lumière primaire (66), et que le capteur à l'avant (56) avec l'ouverture de passage de rayon (82) est décalé latéralement par rapport au rayon de lumière primaire (66) devant la cellule de mesure (14) dans le plan de mesure (23) pour compenser le décalage de rayon dû à la réfraction du rayon de lumière primaire (66) sur la fenêtre d'entrée (72) et la fenêtre de sortie (76) de la cellule de mesure placée à l'oblique.

2. Appareil (1) selon la revendication 1,
dans lequel l'angle de placement oblique (k) dans le plan de mesure (23) est compris entre la normale (17) sur le plan de cellule de mesure (15) et l'axe principal (38) optique dans la plage entre 5° et 62°, de préférence dans la plage entre 10° et 50°, de préférence dans la plage entre 15° et 45°, de préférence de 30° ± 10°, de préférence de ± 5°.

3. Appareil (1) selon l'une quelconque des revendications précédentes,
dans lequel une optique de mise au point (62, 64) est comprise, laquelle met au point le rayon de lumière primaire (66) sur le capteur à l'avant (56).

4. Appareil (1) selon l'une quelconque des revendications précédentes,
dans lequel la distance du capteur à l'avant (56) par rapport à la source de lumière (30) se situe dans la plage entre 200 mm à 600 mm, de préférence dans la plage entre 300 mm et 500 mm, de préférence de 400 mm ± 50 mm, et/ou
dans lequel la distance du capteur à l'avant (56) par rapport au point central (40) de la cellule de mesure (14) se situe dans la plage entre 50 mm à 450 mm, de préférence dans la plage entre 150 mm et 350 mm, de préférence de 250 mm ± 50 mm.

5. Appareil (1) selon l'une quelconque des revendications précédentes,
dans lequel le capteur principal (84) comprend une pluralité de diverses surfaces de capteur (84.1 - 84.43) pouvant être lues individuellement sous la forme de segments annulaires concentriques, de préférence dans une plage d'angle de diffusion entre l'ouverture de passage de rayon et 6,5°,
et/ou
dans lequel le capteur à l'avant (56) présente une multitude de détecteurs individuels (86.1-86.9) assemblés, de préférence dans une plage d'angle de diffusion entre 6,5° et 22°, laquelle est disposée de préférence dans le plan de mesure (23) sur le côté, faisant face au capteur principal (84), de l'ouverture de passage de rayon (82),
en particulier dans lequel les détecteurs individuels (86.1-86.9) assemblés sont répartis dans au moins un premier groupe (86.1-86.4) et un deuxième groupe (86.5-86.9), dans lequel les capteurs du premier groupe sont disposés à des angles de diffusion plus petits que les capteurs du deuxième groupe et les capteurs du premier groupe sont inférieurs aux capteurs du deuxième groupe.

6. Appareil (1) selon l'une quelconque des revendications précédentes,
dans lequel le dispositif détecteur (54) comprend au moins un détecteur de diffusion à l'avant à grand angle (46.1-46.5) à un angle de diffusion à l'avant supérieur à 20°, et/ou au moins un détecteur de diffusion à l'arrière (26.1-26.4) à un angle de diffusion à l'arrière.

7. Appareil (1) selon l'une quelconque des revendications précédentes, dans lequel plusieurs détecteurs de diffusion à l'avant à grand angle (46.1-46.5) et/ou plusieurs détecteurs de diffusion à l'arrière (26.1-26.4) sont compris, qui sont disposés sur une courbure de détecteur avec un rayon de courbure (R) autour du point central (40) de la cellule de mesure (14) et dans lequel le rayon de courbure (R) est inférieur à la distance du capteur à l'avant (56) par rapport à la source de lumière (30) et/ou est inférieur à la distance du capteur à l'avant (56) par rapport à la cellule de mesure (14).

8. Appareil (1) selon l'une quelconque des revendications précédentes,
dans lequel plusieurs détecteurs de diffusion à l'avant à grand angle (46.1-46.5) et/ou plusieurs détecteurs de diffusion à l'arrière (26.1-26.4) sont compris et sont disposés sur une courbure de détecteur avec un rayon de courbure (R) autour du point central (40) de la cellule de mesure (14) et dans lequel le rayon de courbure (R) se situe dans la plage entre 50 mm et 200 mm, de préférence dans la plage entre 75 mm et 150 mm, de préférence de 110 mm ± 25 mm,
en particulier dans lequel les détecteurs de diffusion à l'avant à grand angle (46.1-46.5) sont disposés à un, plusieurs ou tous les angles de diffusion qui suivent :
24 ± 10°,
36,5° ± 10°,
49,3° ± 10°,
63,5° ± 10°,
80° ± 10°,
et/ou dans lequel les détecteurs de diffusion à l'arrière (26.1-26.4) sont disposés à un, plusieurs ou tous les angles de diffusion qui suivent :
105° ± 15°,
140,3° ± 15°,
163,8° ± 15°,
-163,5° ± 15°.

9. Appareil (1) selon l'une quelconque des revendications précédentes,
dans lequel au moins une photodiode de moniteur (P1, P2) est comprise pour surveiller le rayon de lumière primaire (66) réfléchi sur au moins une, sur plusieurs ou sur toutes les surfaces suivantes :
côté extérieur de la fenêtre d'entrée (72),
côté intérieur de la fenêtre d'entrée (72),
côté intérieur de la fenêtre de sortie (76),
côté extérieur de la fenêtre de sortie (76),
dans lequel en particulier une première photodiode (P1) est comprise pour surveiller le rayon de lumière primaire (66) réfléchi sur une sur les deux des surfaces suivantes :
côté extérieur de la fenêtre d'entrée (72),
côté intérieur de la fenêtre d'entrée (72),
et/ou une deuxième photodiode (P2) est comprise pour surveiller le rayon de lumière primaire (66) réfléchi sur une ou les deux des surfaces qui suivent :
côté intérieur de la fenêtre de sortie (76),
côté extérieur de la fenêtre de sortie (76).

10. Appareil (1) selon l'une quelconque des revendications précédentes, dans lequel un, plusieurs ou tous les critères qui suivent sont remplis :
le rayon de lumière primaire (66) est monochromatique et la longueur d'onde λ de la lumière monochromatique se situe dans la plage entre 380 nm et 680 nm,
de préférence entre 480 nm et 580 nm, de préférence λ = 532 nm ± 25 nm,
la source de lumière (30) comprend une fibre optique (34) et un laser (32), lequel est couplé par une fibre à l'optique de mise au point (62, 64) au moyen de la fibre optique (34),
dans la fibre optique (34) est réalisée en particulier en tant qu'une fibre à mode unique de conservation de polarisation,
le rayon de lumière primaire (66) est polarisé de manière perpendiculaire par rapport au plan de mesure (23),
la source de lumière (30) comprend seulement un unique laser, de préférence une diode laser verte (32) en tant que source de lumière primaire.

11. Appareil (1) selon l'une quelconque des revendications précédentes,
dans lequel un collimateur avec une lentille de collimation (62) et une lentille de mise au point (64) sont compris, dans lequel la lentille de mise au point (64) met au point le rayon de lumière primaire (66) sur le capteur à l'avant (56), dans lequel la lentille de mise au point (64) est disposée en particulier sur la sortie de la source de lumière (30) directement après la lentille de collimation (62).

12. Appareil (1) selon la revendication 11,
dans lequel la distance focale de la lentille de mise au point (64) est comprise dans la plage entre 200 mm à 600 mm, de préférence dans la plage entre 300 mm et 500 mm, de préférence 400 mm ± 50 mm, et/ou
dans lequel le 1/e² diamètre de rayon du rayon de lumière primaire (66) après la lentille de collimation (62) se situe dans la plage entre 3 mm et 20 mm, de préférence est de 10 mm ± 5 mm.

13. Appareil (1) selon l'une quelconque des revendications précédentes,
dans lequel l'indice de réfraction du matériau transparent de la fenêtre d'entrée (72) et/ou de la fenêtre de sortie (76) n_{F} est ≤ 1,6, de préférence n_{F} ≤ 1,55, de préférence n_{F} = 1,51 ± 0,5.

14. Appareil (1) selon l'une quelconque des revendications précédentes,
dans lequel au moins un ou plusieurs des critères suivants sont remplis :
le diamètre de rayon du rayon de lumière primaire (66) mis au point sur le capteur principal (84) est, dans les deux sections transversales de rayon (x, y) de manière perpendiculaire à l'axe principal optique, ≤ 60 µm, de préférence ≤ 45 µm, de préférence de 32 µm ± 10 µm,
le rayon de lumière primaire (66) mis au point présente dans la plage du capteur principal (84) un astigmatisme et le capteur principal (84) est disposé le long de l'axe principal optique (38) entre les deux foyers linéaires, provoqués par l'astigmatisme, du rayon de lumière primaire (66), dans lequel le capteur principal (84) est disposé de préférence à l'emplacement du cercle à erreur la plus petite,
le rayon de lumière primaire (66) mis au point présente dans la zone du capteur principal (84) un astigmatisme et le diamètre de rayon horizontal et le diamètre de rayon vertical se distinguent sur le capteur principal (84) d'une valeur inférieure à 50 points, de préférence inférieure à 30 points, de préférence inférieure à 20 points, de préférence de 9 points ± 5 points.
